# EUROPEAN PATENT APPLICATION

(11) **EP 4 750 197 A1**
(43) Date of publication of application: **27.05.2026**
(21) Application number: 24842019.2
(22) Date of filing: 30.04.2024
(51) Int. Cl.: H04W 72/0453, H04L 5/00

(54) **INFORMATION TRANSMISSION METHOD AND APPARATUS, COMMUNICATION DEVICE, COMMUNICATION SYSTEM, AND STORAGE MEDIUM**

(30) Priority: 19.07.2023 WO PCT/CN2023/108265
(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2024/091048
(87) International publication number: WO 2025/016019

(57) **Abstract**

Provided in the embodiments of the present disclosure are an information transmission method and apparatus, a communication device, a communication system, and a storage medium. The method comprises: a terminal receiving first information, wherein the first information is used to determine a configuration of a random access occasion (RO) associated with a subband full duplex (SBFD) symbol, and the configuration of the RO comprises a time domain position of the RO and/or a frequency domain position of the RO; and on the basis of the configuration of the RO, the terminal determining whether the RO is a valid RO.

## Description

### CROSS-REFERENCE TO RELATED APPLICATIONS

This application is based on International Application No. PCT/CN2023/108265, filed on July 19, 2023, the entire content of which is incorporated herein by reference.

### TECHNICAL FIELD

The present disclosure relates to the field of communication technology, and in particular to an information transmission method, an information transmission device, a communication device, a communication system and a storage medium.

### BACKGROUND

In mobile communication (such as the fifth generation (5G) mobile communication) systems, a subcarrier refers to a frequency resource used to transmit data. The subcarrier can be divided into multiple independent subcarrier frequency bands, and each subcarrier frequency has a fixed bandwidth. A slot refers to dividing a time slice into multiple short time periods, and each short time period is a slot. The slot can be divided into multiple symbols, such as for data transmission, and a duration of each symbol can be fixed.

### SUMMARY

As functionality of terminals improves, energy consumption of the terminals increases, resulting in weak battery life.

Embodiments of the present disclosure provide an information transmission method, an information transmission device, a communication device, and a storage medium.

According to a first aspect of the embodiments of the present disclosure, an embodiment of the present disclosure proposes an information transmission method. The method includes: receiving first information, in which the first information is used for determining a configuration of a random access channel occasion (RO) associated with a subband full duplex (SBFD) symbol; in which the configuration of the RO includes: a time domain position of the RO and/or a frequency domain position of the RO; and determining whether the RO is a valid RO according to the configuration of the RO.

According to a second aspect of the embodiments of the present disclosure, an embodiment of the present disclosure proposes an information transmission method. The method includes: sending first information, in which the first information is used for determining a configuration of a random access channel occasion (RO) associated with a subband full duplex (SBFD) symbol; in which the configuration of the RO includes: a time domain position of the RO and/or a frequency domain position of the RO; in which the configuration of the RO is used by a terminal to determine whether the RO is a valid RO.

According to a third aspect of the embodiments of the present disclosure, an embodiment of the present disclosure proposes an information transmission method. The method is performed by a communication system, and the method includes: sending, by a network device, first information to a terminal, in which the first information is used for determining a configuration of a random access channel occasion (RO) associated with a subband full duplex (SBFD) symbol; in which the configuration of the RO includes: a time domain position of the RO and/or a frequency domain position of the RO; determining, by the terminal, whether the RO is a valid RO according to the configuration of the RO.

According to a fourth aspect of the embodiments of the present disclosure, an embodiment of the present disclosure proposes an information transmission device. The device includes: a transceiver module, configured to receive first information, in which the first information is used for determining a configuration of a random access channel occasion (RO) associated with a subband full duplex (SBFD) symbol; in which the configuration of the RO includes: a time domain position of the RO and/or a frequency domain position of the RO; and a processing module, configured to determine whether the RO is a valid RO according to the configuration of the RO.

According to a fifth aspect of the embodiments of the present disclosure, an embodiment of the present disclosure proposes an information transmission device. The device includes: a transceiver module, configured to send first information, in which the first information is used for determining a configuration of a random access channel occasion (RO) associated with a subband full duplex (SBFD) symbol; in which the configuration of the RO includes: a time domain position of the RO and/or a frequency domain position of the RO.

According to a sixth aspect of the embodiments of the present disclosure, an embodiment of the present disclosure provides a communication system. The information transmission system includes a network device and a terminal. The terminal is configured to perform the communication method according to the first aspect. The network device is configured to perform the communication method described in the second aspect.

According to a seventh aspect of the embodiments of the present disclosure, an embodiment of the present disclosure provides a communication device. The communication device includes: one or more processors. The processor is configured to call instructions to cause the communication device to perform the communication method described in the first aspect or the second aspect.

According to an eighth aspect of the embodiments of the present disclosure, an embodiment of the present disclosure proposes a storage medium. The storage medium stores instructions, and when the instructions are executed on a communication device, the communication device is caused to execute the communication method described in the first aspect or the second aspect.

The terminal determines whether an RO associated with an SBFD symbol is a valid RO, so that the RO associated with the SBFD symbol can be used for random access, thereby improving resource utilization efficiency.

It should be understood that the foregoing general description and the following detailed description are explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the description, serve to explain the principles of the embodiments of the present disclosure.
FIG. 1a is a schematic diagram showing an architecture of a communication system according to an embodiment.
FIG. 1b is a schematic diagram of a symbol structure according to an embodiment.
FIG. 1c is a schematic diagram of a symbol structure according to an embodiment.
FIG. 1d is a schematic diagram showing determination of a valid random access channel occasion (RO) according to an embodiment.
FIG. 1e is a schematic diagram showing determination of a valid RO according to an embodiment.
FIG. 2a is a flow chart of an information transmission method according to an embodiment.
FIG. 2b is a schematic diagram of a symbol structure according to an embodiment.
FIG. 2c is a schematic diagram of a symbol structure according to an embodiment.
FIG. 2d is a schematic diagram of a symbol structure according to an embodiment.
FIG. 2e is a schematic diagram of a symbol structure according to an embodiment.
FIG. 2f is a flow chart of an information transmission method according to an embodiment.
FIG. 3a is a flow chart of an information transmission method according to an embodiment.
FIG. 3b is a flow chart of an information transmission method according to an embodiment.
FIG. 3c is a flow chart of an information transmission method according to an embodiment.
FIG. 4a is a flow chart of an information transmission method according to an embodiment.
FIG. 4b is a flow chart of an information transmission method according to an embodiment.
FIG. 5 is a flow chart of an information transmission method according to an embodiment.
FIG. 6 is a flow chart of an information transmission method according to an embodiment.
FIG. 7a is a schematic diagram showing a structure of a terminal according to an embodiment.
FIG. 7b is a schematic diagram showing a structure of an access network device according to an embodiment.
FIG. 8a is a schematic structural diagram of a user equipment (UE) according to an embodiment.
FIG. 8b is a schematic structural diagram of a communication device according to an embodiment.

### DETAILED DESCRIPTION

Embodiments of the present disclosure provide an information transmission method, an information transmission device, a communication device, a communication system, and a storage medium.

In a first aspect, embodiments of the present disclosure provide an information transmission method. The method includes: receiving first information, in which the first information is used for determining a configuration of a random access channel occasion (RO) associated with a subband full duplex (SBFD) symbol; in which the configuration of the RO includes: a time domain position of the RO and/or a frequency domain position of the RO; and determining whether the RO is a valid RO according to the configuration of the RO.

According to some embodiments of the first aspect, in some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

In the above embodiments, the valid RO may be determined based on different conditions.

According to some embodiments of the first aspect, in some embodiments, the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

In the above embodiment, a method for resource indication is more flexible.

According to some embodiments of the first aspect, in some embodiments, the first type of terminal is a terminal that is capable to recognize an SBFD time-frequency configuration; and the second type of terminal is a terminal that is unable to recognize an SBFD time-frequency configuration.

According to some embodiments of the first aspect, in some embodiments, an RO in the first RACH resource, the second RACH resource and/or the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by a time division duplex (TDD) uplink (UL) and downlink (DL) transmission common configuration (TDD-UL-DL-ConfigCommon), or a symbol without TDD UL DL transmission common configuration and configured as an SBFD symbol; the second type of SBFD symbol is a symbol configured as a DL symbol by the TDD UL DL transmission common configuration and configured as an SBFD symbol.

According to some embodiments of the first aspect, in some embodiments, conditions for determining valid ROs in the second type of RO and the third type of RO are different.

According to some embodiments of the first aspect, in some embodiments, in the third RACH resource, the first type of RO is an invalid RO.

According to some embodiments of the first aspect, in some embodiments, in the third RACH resource, the first type of RO is an invalid RO, and an RO in the second type of RO and/or the third type of RO is an invalid RO in a case that a symbol where the RO is located includes at least one non-SBFD symbol.

In the above embodiments, the terminal determines whether the RO associated with the SBFD symbol is the valid RO, so that the RO associated with the SBFD symbol can be used for random access, thereby improving resource utilization efficiency.

According to some embodiments of the first aspect, in some embodiments, determining whether the RO is a valid RO based on the configuration of the RO includes: determining whether the RO is a valid RO based at least on whether the valid RO is allowed to include an SBFD symbol and a non-SBFD symbol, and the configuration of the RO.

In the above embodiments, whether ROs of different forms associated with SBFD symbols are valid ROs is determined based on whether the valid RO is allowed to include both the SBFD symbol and the non-SBFD symbol, so that the ROs associated with the SBFD symbols can be used for random access, thereby improving resource utilization efficiency.

According to some embodiments of the first aspect, in some embodiments, determining whether the RO is a valid RO based at least on whether the valid RO is allowed to include an SBFD symbol and a non-SBFD symbol and the configuration of the RO includes: determining that the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

In the above embodiments, whether an RO that does not include both the SBFD symbol and the non-SBFD symbol is a valid RO is determined based on the first condition, so that the RO associated with the SBFD symbol can be used for random access, thereby improving resource utilization efficiency.

According to some embodiments of the first aspect, in some embodiments, the first information does not include a time division duplex (TDD) uplink and downlink transmission common configuration (TDD-UL-DL-ConfigCommon), and the first information includes a semi-static SBFD configuration, and the first condition includes at least one of: the RO being within a flexible F symbol or the RO being within an SBFD symbol; in a physical random access channel (PRACH) slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In the above embodiments, the RO that does not simultaneously include the SBFD symbol and the non-SBFD symbol is determined, and a TDD uplink and downlink transmission common configuration is not included in the first information, and the first information includes the semi-static SBFD configuration, which defines the conditions for a valid RO are limited, so that the RO associated with the SBFD symbol can be used for random access, thereby improving resource utilization efficiency.

According to some embodiments of the first aspect, in some embodiments, the first information includes a TDD uplink and downlink transmission common configuration and a semi-static SBFD configuration, and the first condition includes at least one of: the RO being within an UL symbol; or an UL symbol is a symbol that is configured as a UL symbol and is not configured as an SBFD symbol.

In the above embodiments, the RO that does not simultaneously include the SBFD symbol and the non-SBFD symbol is determined, the TDD uplink and downlink transmission common configuration is included in the first information, and the first information includes the semi-static SBFD configuration, which defines the conditions for a valid RO, so that the RO associated with the SBFD symbol can be used for random access, thereby improving resource utilization efficiency.

According to some embodiments of the first aspect, in some embodiments, the first information includes a TDD uplink and downlink transmission common configuration and a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is a symbol configured as a DL symbol and not configured as an SBFD symbol; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In the above embodiments, the RO that does not simultaneously include the SBFD symbol and the non-SBFD symbol is determined, the TDD uplink and downlink transmission common configuration is included in the first information, and the first information includes the semi-static SBFD configuration, which defines the conditions for a valid RO, so that the RO associated with the SBFD symbol can be used for random access, thereby improving resource utilization efficiency.

According to some embodiments of the first aspect, in some embodiments, determining whether the RO is a valid RO based at least on whether the valid RO is allowed to include an SBFD symbol and a non-SBFD symbol and the configuration of the RO includes: determining that the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

In the above embodiments, the RO including both the SBFD symbol and the non-SBFD symbol is determined, a TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the first aspect, in some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the first aspect, in some embodiments, the first information includes a TDD uplink and downlink transmission common configuration and a semi-static SBFD configuration, and the second condition includes at least one of: the RO being within an UL symbol; wherein an UL symbol being a symbol that is configured as a UL symbol and is not configured as an SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the first aspect, in some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the first aspect, in some embodiments, the method further includes at least one of: determining whether to allow the valid RO to include an SBFD symbol and a non-SBFD symbol according to a communication protocol; or receiving second information, in which the second information indicates whether the valid RO is allowed to include a SBFD symbol and a non-SBFD symbol.

In the above embodiments, whether to allow the valid RO to include the SBFD symbol and the non-SBFD symbol is determined through a communication protocol or a network device instruction, thereby improving configuration flexibility.

According to some embodiments of the first aspect, in some embodiments, determining whether the RO is a valid RO according to the configuration of the RO includes: determining that the RO is not the valid RO in a case that the RO includes an SBFD symbol, and a frequency domain range of the RO has an overlapping portion with outside of a frequency domain range of UL transmission on the SBFD symbol.

In the above embodiments, the ROs having an overlapping portion with outside of the frequency domain range of the UL transmission on the SBFD symbol are uniformly determined as valid ROs, thereby reducing the situation where a terminal supporting the SBFD and a terminal not supporting the SBFD make inconsistent judgments on different ROs and reducing the complexity of the system.

According to some embodiments of the first aspect, in some embodiments, the time domain position configured by the configuration of the RO includes an SBFD symbol, and a frequency domain range of the RO has no overlapping portion with outside of a frequency domain range of UL transmission on the SBFD symbol.

In the above embodiments, the time domain position of the RO configured by the network device includes the SBFD symbol, and the frequency domain range of the RO has no overlapping portion with outside of the frequency domain range of the UL transmission on the SBFD symbol. This reduces the situation where the judgment criteria for different ROs are not unified between a terminal supporting the SBFD and a terminal not supporting the SBFD, and reduces the complexity of the mapping relationship between SSB and valid RO.

According to some embodiments of the first aspect, in some embodiments, the RO configured by the configuration of the RO includes an SBFD symbol or a non-SBFD symbol.

In the above embodiments, the time domain position of the RO configured by the network device includes the SBFD symbol, and the RO does not include the SBFD symbol and the non-SBFD symbol at the same time, thereby reducing the situation where the judgment criteria of different ROs for a terminal supporting the SBFD and a terminal not supporting the SBFD are not unified, and reducing the complexity of a mapping relationship between SSBs and valid ROs.

In a second aspect, embodiments of the present disclosure provide an information transmission method. The method includes: sending first information, in which the first information is used for determining a configuration of a random access channel occasion (RO) associated with a subband full duplex (SBFD) symbol; in which the configuration of the RO includes: a time domain position of the RO and/or a frequency domain position of the RO; in which the configuration of the RO is used by a terminal to determine whether the RO is a valid RO.

In the above embodiments, the terminal determines whether the RO associated with the SBFD symbol is the valid RO, so that the RO associated with the SBFD symbol can be used for random access, thereby improving resource utilization efficiency.

According to some embodiments of the second aspect, in some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

According to some embodiments of the second aspect, in some embodiments, the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

According to some embodiments of the second aspect, in some embodiments, the first type of terminal is a terminal that is capable to recognize an SBFD time-frequency configuration; and the second type of terminal is a terminal that is unable to recognize an SBFD time-frequency configuration.

According to some embodiments of the second aspect, in some embodiments, an RO in the first RACH resource, the second RACH resource and the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by TDD-UL-DL-ConfigCommon, or a symbol without TDD-UL-DL-ConfigCommon and configured as an SBFD symbol; the second type of SBFD symbol is a symbol configured as a DL symbol by the TDD-UL-DL-ConfigCommon and configured as an SBFD symbol.

According to some embodiments of the second aspect, in some embodiments, conditions for determining valid ROs in the second type of RO and the third type of RO are different.

According to some embodiments of the second aspect, in some embodiments, in the third RACH resource, the first type of RO is an invalid RO.

According to some embodiments of the second aspect, in some embodiments, in the third RACH resource, the first type of RO is an invalid RO, and an RO in the second type of RO and/or the third type of RO is an invalid RO in a case that a symbol where the RO is located includes at least one non-SBFD symbol.

According to some embodiments of the second aspect, in some embodiments, the configuration of the RO is used for determining whether the RO is a valid RO based at least on whether the valid RO is allowed to include an SBFD symbol and a non-SBFD symbol.

In the above embodiments, whether ROs of different forms associated with SBFD symbols are valid ROs is determined based on whether the valid RO is allowed to include the SBFD symbol and the non-SBFD symbol, so that ROs associated with SBFD symbols can be used for random access, thereby improving resource utilization efficiency.

According to some embodiments of the second aspect, in some embodiments, the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

In the above embodiments, whether an RO that does not include both the SBFD symbol and the non-SBFD symbol is a valid RO is determined based on the first condition, so that the RO associated with the SBFD symbol can be used for random access, thereby improving resource utilization efficiency.

According to some embodiments of the second aspect, in some embodiments, the first information does not include a TDD uplink and downlink transmission common configuration, and the first information includes a semi-static SBFD configuration, and the first condition includes at least one of: the RO being within a flexible F symbol or the RO being within an SBFD symbol; in a physical random access channel (PRACH) slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In the above embodiments, the RO that does not simultaneously include the SBFD symbol and the non-SBFD symbol is determined, and a TDD uplink and downlink transmission common configuration is not included in the first information, and the first information includes the semi-static SBFD configuration, which defines the conditions for a valid RO are limited, so that the RO associated with the SBFD symbol can be used for random access, thereby improving resource utilization efficiency.

According to some embodiments of the second aspect, in some embodiments, the first information includes a TDD uplink and downlink transmission common configuration and a semi-static SBFD configuration, and the first condition includes at least one of: the RO being within an UL symbol; wherein an UL symbol is a symbol that is configured as a UL symbol and is not configured as an SBFD symbol.

In the above embodiments, the RO that does not simultaneously include the SBFD symbol and the non-SBFD symbol is determined, the TDD uplink and downlink transmission common configuration is included in the first information, and the first information includes the semi-static SBFD configuration, which defines the conditions for a valid RO, so that the RO associated with the SBFD symbol can be used for random access, thereby improving resource utilization efficiency.

According to some embodiments of the second aspect, in some embodiments, the first information is configured with a TDD uplink and downlink transmission common configuration, and the first information includes a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is a symbol configured as a DL symbol and not configured as an SBFD symbol; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In the above embodiments, the RO that does not simultaneously include the SBFD symbol and the non-SBFD symbol is determined, the TDD uplink and downlink transmission common configuration is included in the first information, and the first information includes the semi-static SBFD configuration, which defines the conditions for a valid RO, so that the RO associated with the SBFD symbol can be used for random access, thereby improving resource utilization efficiency.

According to some embodiments of the second aspect, in some embodiments, the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

In the above embodiments, the RO including both the SBFD symbol and the non-SBFD symbol is determined, a TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the second aspect, in some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the second aspect, in some embodiments, the first information includes a TDD uplink and downlink transmission common configuration and a semi-static SBFD configuration, and the second condition includes at least one of: the RO being within an UL symbol; wherein an UL symbol being a symbol that is configured as a UL symbol and is not configured as an SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the second aspect, in some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In the above embodiments, the RO including both the SBFD symbol and the non-SBFD symbol is determined, the TDD uplink and downlink transmission common configuration is included in the first information, and the first information includes the semi-static SBFD configuration, which defines the conditions for the valid RO, so that the RO associated with the SBFD symbol can be used for random access, thereby improving resource utilization efficiency.

According to some embodiments of the second aspect, in some embodiments, the method further includes: sending second information, in which the second information indicates whether the valid RO is allowed to include a SBFD symbol and a non-SBFD symbol.

In the above embodiments, whether to allow the valid RO to include both the SBFD symbol and the non-SBFD symbol is determined through a communication protocol or a network device instruction, thereby improving configuration flexibility.

According to some embodiments of the second aspect, in some embodiments, the RO is not the valid RO in a case that the RO includes an SBFD symbol, and a frequency domain range of the RO has an overlapping portion with outside of a frequency domain range of UL transmission on the SBFD symbol.

In the above embodiments, the ROs having an overlapping portion with outside of the frequency domain range of the UL transmission on the SBFD symbol are uniformly determined as valid ROs, thereby reducing the situation where a terminal supporting the SBFD and a terminal not supporting the SBFD make inconsistent judgments on different ROs and reducing the complexity of the system.

According to some embodiments of the second aspect, in some embodiments, the time domain position configured by the configuration of the RO includes an SBFD symbol, and a frequency domain range of the RO has no overlapping portion with outside of a frequency domain range of UL transmission on the SBFD symbol.

In the above embodiments, the time domain position of the RO configured by the network device includes the SBFD symbol, and the frequency domain range of the RO has no overlapping portion with outside of the frequency domain range of the UL transmission on the SBFD symbol. This reduces the situation where the judgment criteria for different ROs are not unified between a terminal supporting the SBFD and a terminal not supporting the SBFD, and reduces the complexity of the mapping relationship between SSB and valid RO.

According to some embodiments of the second aspect, in some embodiments, the RO configured by the configuration of the RO includes an SBFD symbol or a non-SBFD symbol.

In the above embodiments, the time domain position of the RO configured by the network device includes the SBFD symbol, and the RO does not include the SBFD symbol and the non-SBFD symbol at the same time, thereby reducing the situation where the judgment criteria of different ROs for a terminal supporting the SBFD and a terminal not supporting the SBFD are not unified, and reducing the complexity of a mapping relationship between SSBs and valid ROs.

In a third aspect, embodiments of the present disclosure provide an information transmission method, performed by a communication system. The method includes: sending, by a network device, first information to a terminal, in which the first information is used for determining a configuration of a random access channel occasion (RO) associated with a subband full duplex (SBFD) symbol; in which the configuration of the RO includes: a time domain position of the RO and/or a frequency domain position of the RO; and determining, by the terminal, whether the RO is a valid RO according to the configuration of the RO.

In a fourth aspect, embodiments of the present disclosure provide an information transmission device. The device includes: a transceiver module, configured to receive first information, in which the first information is used for determining a configuration of a random access channel occasion (RO) associated with a subband full duplex (SBFD) symbol; in which the configuration of the RO includes: a time domain position of the RO and/or a frequency domain position of the RO; and a processing module, configured to determine whether the RO is a valid RO according to the configuration of the RO.

According to some embodiments of the fourth aspect, in some embodiments, the processing module is configured as follows: the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

According to some embodiments of the fourth aspect, in some embodiments, the processing module is configured as follows: the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

According to some embodiments of the fourth aspect, in some embodiments, the processing module is configured as follows: the first type of terminal is a terminal that is capable to recognize an SBFD time-frequency configuration; and the second type of terminal is a terminal that is unable to recognize an SBFD time-frequency configuration.

According to some embodiments of the fourth aspect, in some embodiments, the processing module is configured as follows: an RO in the first RACH resource, the second RACH resource and/or the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by a time division duplex (TDD) uplink (UL) and downlink (DL) transmission common configuration (TDD-UL-DL-ConfigCommon), or a symbol without TDD UL DL transmission common configuration and configured as an SBFD symbol; the second type of SBFD symbol is a symbol configured as a DL symbol by the TDD UL DL transmission common configuration and configured as an SBFD symbol.

According to some embodiments of the fourth aspect, in some embodiments, the processing module is configured to: conditions for determining valid ROs in the second type of RO and the third type of RO are different.

According to some embodiments of the fourth aspect, in some embodiments, the processing module is configured as follows: in the third RACH resource, the first type of RO is an invalid RO.

According to some embodiments of the fourth aspect, in some embodiments, the processing module is configured as follows: in the third RACH resource, the first type of RO is an invalid RO, and an RO in the second type of RO and/or the third type of RO is an invalid RO in a case that a symbol where the RO is located includes at least one non-SBFD symbol.

According to some embodiments of the fourth aspect, in some embodiments, the processing module is configured to: determine whether the RO is a valid RO based at least on whether the valid RO is allowed to include an SBFD symbol and a non-SBFD symbol, and the configuration of the RO.

According to some embodiments of the fourth aspect, in some embodiments, the processing module is configured to: determine that the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

According to some embodiments of the fourth aspect, in some embodiments, the first information does not include a time division duplex (TDD) uplink and downlink transmission common configuration (TDD-UL-DL-ConfigCommon), and the first information includes a semi-static SBFD configuration, and the first condition includes at least one of: the RO being within a flexible F symbol or the RO being within an SBFD symbol; in a physical random access channel (PRACH) slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

According to some embodiments of the fourth aspect, in some embodiments, the first information includes a TDD uplink and downlink transmission common configuration and a semi-static SBFD configuration, and the first condition includes at least one of: the RO being within an UL symbol; wherein an UL symbol is a symbol that is configured as a UL symbol and is not configured as an SBFD symbol.

According to some embodiments of the fourth aspect, in some embodiments, the first information includes a TDD uplink and downlink transmission common configuration and a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is a symbol configured as a DL symbol and not configured as an SBFD symbol; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

According to some embodiments of the fourth aspect, in some embodiments, the processing module is configured to: determine that the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

According to some embodiments of the fourth aspect, in some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

According to some embodiments of the fourth aspect, in some embodiments, the first information includes a TDD uplink and downlink transmission common configuration and a semi-static SBFD configuration, and the second condition includes at least one of: the RO being within an UL symbol; wherein an UL symbol being a symbol that is configured as a UL symbol and is not configured as an SBFD symbol.

According to some embodiments of the fourth aspect, in some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

According to some embodiments of the fourth aspect, in some embodiments, the processing module is configured to determine whether to allow the valid RO to include an SBFD symbol and a non-SBFD symbol according to a communication protocol; and/or the transceiver module is configured to receive receiving second information, in which the second information indicates whether the valid RO is allowed to include a SBFD symbol and a non-SBFD symbol.

According to some embodiments of the fourth aspect, in some embodiments, the transceiver module is further configured to: determine that the RO is not the valid RO in a case that the RO includes an SBFD symbol, and a frequency domain range of the RO has an overlapping portion with outside of a frequency domain range of UL transmission on the SBFD symbol

According to some embodiments of the fourth aspect, in some embodiments, the time domain position configured by the configuration of the RO includes an SBFD symbol, and a frequency domain range of the RO has no overlapping portion with outside of a frequency domain range of UL transmission on the SBFD symbol.

According to some embodiments of the fourth aspect, in some embodiments, the RO configured by the configuration of the RO includes an SBFD symbol or a non-SBFD symbol.

In a fifth aspect, embodiments of the present disclosure provide an information transmission device. The device includes: a transceiver module, configured to send first information, in which the first information is used for determining a configuration of a random access channel occasion (RO) associated with a subband full duplex (SBFD) symbol; in which the configuration of the RO includes: a time domain position of the RO and/or a frequency domain position of the RO. The configuration of the RO is used by a terminal to determine whether the RO is a valid RO.

According to some embodiments of the fifth aspect, in some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

According to some embodiments of the fifth aspect, in some embodiments, the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

According to some embodiments of the fifth aspect, in some embodiments, the first type of terminal is a terminal that is capable to recognize an SBFD time-frequency configuration; and the second type of terminal is a terminal that is unable to recognize an SBFD time-frequency configuration.

According to some embodiments of the fifth aspect, in some embodiments, an RO in the first RACH resource, the second RACH resource and the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by TDD-UL-DL-ConfigCommon, or a symbol without TDD-UL-DL-ConfigCommon and configured as an SBFD symbol; the second type of SBFD symbol is a symbol configured as a DL symbol by the TDD-UL-DL-ConfigCommon and configured as an SBFD symbol.

According to some embodiments of the fifth aspect, in some embodiments, conditions for determining valid ROs in the second type of RO and the third type of RO are different.

According to some embodiments of the fifth aspect, in some embodiments, in the third RACH resource, the first type of RO is an invalid RO.

According to some embodiments of the fifth aspect, in some embodiments, in the third RACH resource, the first type of RO is an invalid RO, and an RO in the second type of RO and/or the third type of RO is an invalid RO in a case that a symbol where the RO is located includes at least one non-SBFD symbol.

According to some embodiments of the fifth aspect, in some embodiments, the configuration of the RO is used for determining whether the RO is a valid RO based at least on whether the valid RO is allowed to include an SBFD symbol and a non-SBFD symbol.

According to some embodiments of the fifth aspect, in some embodiments, the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

According to some embodiments of the fifth aspect, in some embodiments, the first information does not include a TDD uplink and downlink transmission common configuration, and the first information includes a semi-static SBFD configuration, and the first condition includes at least one of: the RO being within a flexible F symbol or the RO being within an SBFD symbol; in a physical random access channel (PRACH) slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

According to some embodiments of the fifth aspect, in some embodiments, the first information includes a TDD uplink and downlink transmission common configuration and a semi-static SBFD configuration, and the first condition includes at least one of: the RO being within an UL symbol; wherein an UL symbol is a symbol that is configured as a UL symbol and is not configured as an SBFD symbol.

According to some embodiments of the fifth aspect, in some embodiments, the first information is configured with a TDD uplink and downlink transmission common configuration, and the first information includes a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which the DL symbol is a symbol configured as a DL symbol and not configured as an SBFD symbol; N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

According to some embodiments of the fifth aspect, in some embodiments, the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

According to some embodiments of the fifth aspect, in some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

According to some embodiments of the fifth aspect, in some embodiments, the first information includes a TDD uplink and downlink transmission common configuration and a semi-static SBFD configuration, and the second condition includes at least one of: the RO being within an UL symbol; wherein an UL symbol being a symbol that is configured as a UL symbol and is not configured as an SBFD symbol.

According to some embodiments of the fifth aspect, in some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

According to some embodiments of the fifth aspect, in some embodiments, the device further includes: sending second information, in which the second information indicates whether the valid RO is allowed to include a SBFD symbol and a non-SBFD symbol.

According to some embodiments of the fifth aspect, in some embodiments, the RO is not the valid RO in a case that the RO includes an SBFD symbol, and a frequency domain range of the RO has an overlapping portion with outside of a frequency domain range of UL transmission on the SBFD symbol.

According to some embodiments of the fifth aspect, in some embodiments, the time domain position configured by the configuration of the RO includes an SBFD symbol, and a frequency domain range of the RO has no overlapping portion with outside of a frequency domain range of UL transmission on the SBFD symbol.

According to some embodiments of the fifth aspect, in some embodiments, the RO configured by the configuration of the RO includes an SBFD symbol or a non-SBFD symbol.

In a sixth aspect, embodiments of the present disclosure provide a communication system. The information transmission system includes a network device and a terminal. The terminal is configured to perform the communication method according to the first aspect. The network device is configured to perform the communication method described in the second aspect.

In a seventh aspect, embodiments of the present disclosure provide a communication device. The communication device includes: one or more processors. The processor is configured to call instructions to cause the communication device to perform the communication method described in the first aspect or the second aspect.

In an eighth aspect, embodiments of the present disclosure provide a storage medium storing instructions. When the instructions are executed on a communication device, the communication device is caused to perform the communication method described in the first aspect or the second aspect.

In above embodiments, the terminal can determine the service end time of the first beam and/or the service start time of the second beam, so that the terminal can perform beam switching in time, improving the time accuracy of performing operations related to beam switching, and ensuring service continuity.

It is understandable that the above access network device, terminal, communication device, communication system, storage medium, program product, and computer program are all used to execute the method provided by the embodiments of the present disclosure. Therefore, for the beneficial effects that can be achieved, reference may be made to the beneficial effects in the corresponding method, which are not repeated here.

Embodiments of the present disclosure provide an information transmission method, an information transmission device, a communication device, a communication system, and a storage medium. In some embodiments, the terms information transmission method, information processing method, method for information transmission, etc. can be replaced with each other, the terms information transmission device, information processing device, device for information transmission, etc. can be replaced with each other, and the terms communication system, information processing system, etc. can be replaced with each other.

Embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution obtained after removing some steps in a certain embodiment can also be implemented as an independent embodiment, and the order of the steps in a certain embodiment can be arbitrarily exchanged. In addition, optional implementations in a certain embodiment can be arbitrarily combined. In addition, the embodiments can be arbitrarily combined. For example, some or all of the steps of different embodiments can be arbitrarily combined, and a certain embodiment can be arbitrarily combined with an optional implementation of other embodiments.

In various embodiments of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in embodiments of the present disclosure are only for the purpose of describing specific embodiments and are not intended to limit the present disclosure.

In embodiments of the present disclosure, unless otherwise specified, elements expressed in a singular form, such as "a", "an", "the", "above", "said", "aforementioned", "this", etc., may mean "one and only one", or "one or more", "at least one", etc. For example, when using articles such as "a", "an", "the" in English in translation, the noun after the article may be understood as a singular expression or a plural expression.

In embodiments of the present disclosure, "a plurality of" means to two or more.

In some embodiments, the terms such as "at least one", "one or more", "a plurality of", "multiple" and the like can be used interchangeably.

In some embodiments, "at least one of A and B", "A and/or B", "A in one case, B in another case", "in response to a case A, in response to another case B", etc., may include the following technical solutions depending on situations: performing A in some embodiments (performing A independently of B); performing B in some embodiments (performing B independently of A); selecting one of A or B for execution in some embodiments (selectively performing A or B); and performing A and B in some embodiments (performing both A and B). The similar principle applies when there are more branches such as A, B, C, etc.

In some embodiments, expressions such as "A or B", depending on situations, may include the following technical solutions: performing A in some embodiments (performing A independently of B); performing B in some embodiments (performing B independently of A); and selecting one of A or B for execution in some embodiments (selectively performing A or B). The similar principle applies when there are more branches such as A, B, C, etc.

The prefix terms such as "first" and "second" in embodiments of the present disclosure are used solely to distinguish different described objects and do not constitute restrictions on a position, a sequence, a priority, quantity, or content of the described objects. For a statement regarding the described object, reference may be made to claims or descriptions in the context of the embodiments and should not constitute unnecessary restrictions due to the use of the above prefix terms. For example, if the described object is a "field", ordinal numbers before the "field" in a "first field" and a "second field" do not limit a position or a sequence between the fields. "First" and "second" do not limit whether modified "fields" are in the same message, nor do they limit an order of the "first field" and the "second field." For another example, if the described object is a "level", ordinal numbers before the "level" in a "first level" and a "second level" do not limit a priority between the levels. Furthermore, a quantity of described objects is not limited by the ordinal numbers, which may be one or more. Taking a "first device" as an example, there may be one or more "devices". In addition, objects modified by different words may be the same or different. For example, if the described object is a "device", "first device" and "second device" may be the same device or different devices, and their types may be the same or different. Similarly, if the described object is "information", "first information" and "second information" may be the same information or different information, and their content may be the same or different.

In some embodiments, "including A", "containing A", "configured to indicate A", or "carrying A" may be interpreted as directly carrying A or indirectly indicating A.

In some embodiments, terms such as "time/frequency", "time/frequency domain", etc. refer to time domain and/or frequency domain.

In some embodiments, terms such as "in response to...", "in response to determining...", "in a case that...", "when...", "while...", "in the event of...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" may be interpreted as either physical or virtual. Names are not limited to those recorded in the embodiments. Terms such as "apparatus", "equipment", "device", "circuit", "network element", "node", "function", "unit", "section", "system", "network", "chip", "chip system", "entity", "subject", etc. can be used interchangeably.

In some embodiments, "network" may be interpreted as a device included in a network, for example, an access network device, a core network device, etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like can be used interchangeably.

In some embodiments, terms such as "terminal" or "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, an access network device, a core network device, or a network device can be replaced by a terminal. For example, a structure in which the communication between the access network device, the core network device, or the network device and the terminal is replaced by the communication between multiple terminals (for example, device-to-device (D2D), vehicle-to-everything (V2X), etc.). In this case, it can also be designed as a structure in which the terminal has all or part of the functions of the access network device. In addition, terms such as "uplink" and "downlink" can also be replaced by terms corresponding to communication (for example, "side") between terminals. For example, an uplink channel, a downlink channel, etc. can be replaced by a side channel, and uplink, downlink, etc. can be replaced by side link.

In some embodiments, a terminal may be replaced by an access network device, a core network device, or a network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the user's consent.

In addition, each element, each row, or each column in tables of embodiments of the present disclosure may be implemented as an independent embodiment. Any combination of elements, rows, or columns may also be implemented as an independent embodiment.

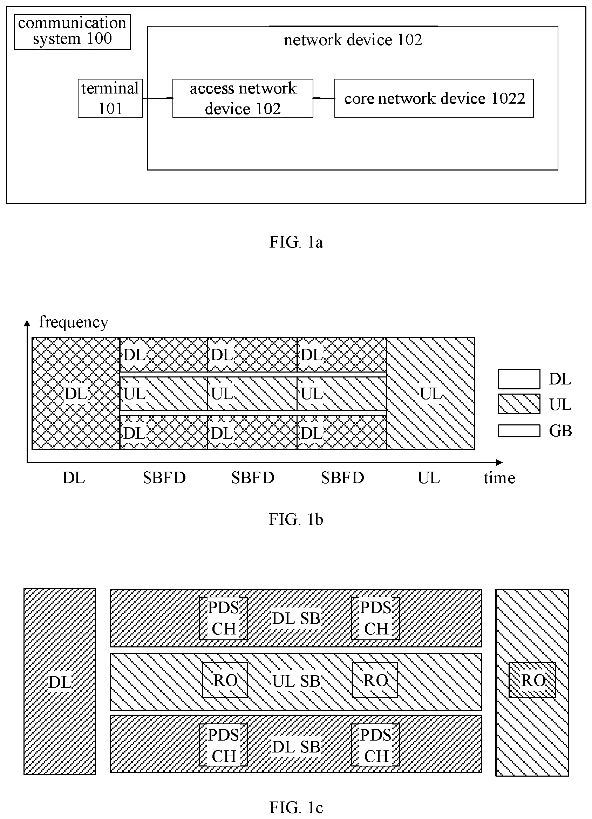

FIG. 1a is a schematic diagram of an architecture of a communication system according to an embodiment of the present disclosure.

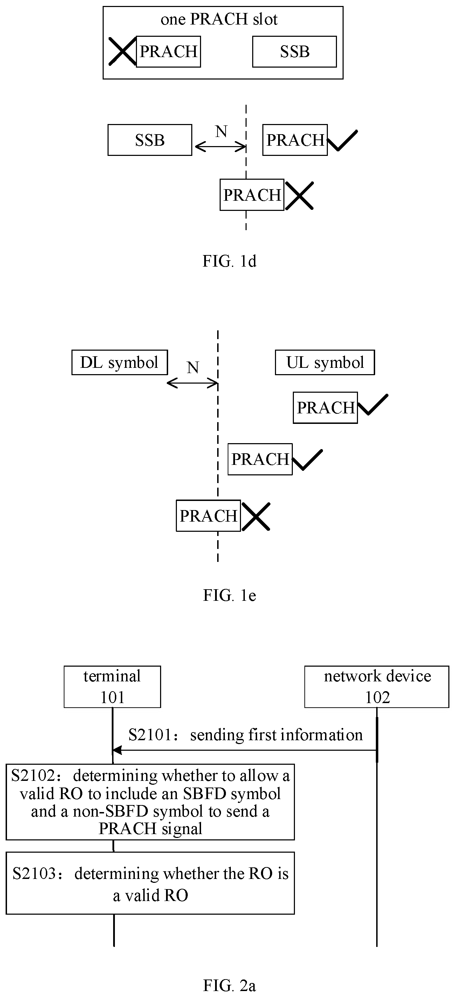

As shown in FIG. 1, a communication system 100 may include a terminal 101 and a network device 102.

In some embodiments, the network device 102 includes at least one of: an access network device 1021 and a core network device 1022.

In some embodiments, the terminal 101 includes, for example, at least one of a mobile phone, a wearable device, an Internet of Things device, or a car with a communication function, a smart car, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the access network device 1021 may be, for example, at least one of a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some embodiments, the technical solution of the present disclosure may be applied to an architecture of the Open RAN. In this case, an interface between access network devices or within the access network device in embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of functions of the protocol layer are placed in the CU for centralized control, and some or all of the remaining functions of the protocol layer are distributed in the DUs, and the DUs are centrally controlled by the CU, which is not limited herein.

In some embodiments, the core network device 1022 includes, for example, at least one of an evolved packet core (EPC), a 5G core network (5GCN), or a next generation core (NGC).

It may be understood that the communication system in embodiments of the present disclosure is to clearly illustrate the technical solution of embodiments of the present disclosure, and does not constitute a limitation on the technical solution provided by embodiments of the present disclosure. Those skilled in the art may know, with evolution of the system architecture and emergence of new service scenarios, the technical solution provided by embodiments of the disclosure is also applicable to similar technical problems.

The following embodiments of the present disclosure may be applied to the communication system 100 shown in FIG. 1a, or to part of the subjects, which are not limited herein. The subjects shown in FIG. 1a are examples. The communication system may include all or part of the subjects in FIG. 1a, or may include other subjects not shown in FIG. 1. The subjects may be in any number and in any form. Connection relationships between the subjects are illustrative. The subjects may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems extended based on them, etc. In addition, multiple systems (e.g., LTE or a combination of LTE-A and 5G) may be combined for application.

In order to improve uplink coverage and throughput, data communication can be performed through subband full duplex (SBFD) technology. In an embodiment, on a carrier component (CC) in a downlink (DL) symbol or a flexible (F) symbol, the frequency domain is divided into multiple subbands (SBs), the multiple SBs includes one UL subband and at least one DL subband. A base station can send a DL signal in the DL subband and receive a UL signal in the UL subband simultaneously. A symbol can be configured by TDD-UL-DL-ConfigCommon or TDD-UL-DL-ConfigDedicated, or it can be indicated by DCI2-0 as a DL symbol or an F symbol. When a symbol includes both a DL subband and a UL subband in a frequency domain, it can be called an SBFD symbol. Similarly, when multiple symbols included in a slot includes at least one SBFD symbol, the slot can be called an SBFD slot. As shown in FIG. 1b, slot #0 is a DL slot including 14 DL symbols, slots #1-3 are SBFD slots, each including 14 SBFD symbols, and slot #4 is a UL slot including 14 UL symbols.

In addition, as shown in FIG. 1b, there may be a guard band (GB) between the DL subband and the UL subband to reduce interference between a DL signal in the DL subband and a UL signal in the UL subband through frequency domain isolation.

In the SBFD symbol, a frequency domain range that can be used for UL transmission includes the following two cases.
1. The GB and the DL subband cannot be used for UL transmission, and the UL subband can be used for UL transmission.
2. The DL subband cannot be used for UL transmission, and the UL subband and the GB can be used for UL transmission.

In the SBFD symbol, a frequency domain range that can be used for UL transmission can be called a UL frequency domain range, and a frequency domain range that cannot be used for UL transmission can be referred to as outside of the UL frequency domain range. According to above analysis, UL frequency domain ranges of a non-SBFD symbol and a SBFD symbol are different. The UL frequency domain range is a UL frequency domain range on a CC. In the SBFD symbol, an UL frequency domain range on an UL BWP refers to a frequency domain range where an UL frequency domain range on a BWP overlaps with the UL frequency domain range on the CC. Unless otherwise specified, the UL frequency domain range in this embodiment refers to the UL frequency domain range on the BWP.

In random access, when the UE is in an idle state, it can measure received signal strength of SSB beams of an initial access cell and other information, to select an optimal SSB beam. In a direction of the optimal SSB beam, a physical random access channel (PRACH) signal is sent at a random access channel occasion (RO, RACH Occasion) for random access. In addition, in other states, the UE can also send a PRACH signal at an RO for random access. The random access includes: contention-based random access (CBRA) and non-contention-based random access (CFRA). In the CBRA, there is situation where multiple UEs using the same preamble, that is, the PRACH signals of two UEs conflict, and this conflict may cause random access to fail.

In a SBFD symbol, the UE can send an uplink signal in an UL SB. Therefore, as shown in FIG. 1c, configuring an RO in the SBFD symbol can increase the number of ROs compared to configuring RO only in the UL symbol or the F symbol. An SBFD aware UE is a UE that can recognize the SBFD symbol, which can perform random access in the RO configured in the SBFD symbol, reduce access delay, and reduce a probability of PRACH signal collision between different UEs in the CBRA.

After the RO is configured, it is further determined whether the RO is a valid RO. Only the valid RO can be used to send the PRACH signal. Frequency domain ranges that the SBFD symbol and the UL symbol can be used for UL transmission are different. In addition, whether one PRACH transmission can span SBFD and non-SBFD symbols remains to be studied. Therefore, the following factors may be further considered to determine whether an RO is a valid RO: the frequency domain ranges that the SBFD symbol and the UL symbol can use for UL transmission are different; whether a valid RO can span the SBFD and non-SBFD symbols.

In some embodiments, whether an RO is a valid RO may be determined based on the following conditions.

As shown in FIG. 1d, tdd-UL-DL-ConfigurationCommon is not configured:
Solution 1-1: an RO that meets condition 1-1-1 is a valid RO;
Condition 1-1-1: in a PRACH slot, the RO does not precede an SSB; the RO is at least N symbols away from the last symbol of a previous SSB.

As shown in FIG. 1e, tdd-UL-DL-ConfigurationCommon is configured:
Solution 2-1: an RO that meets condition 2-1-1 or condition 2-1-2 is a valid RO;
Condition 2-1-1: the RO is within an UL symbol;
Condition 2-1-2: in a PRACH slot, the RO is does not precede an SSB; the RO is at least N symbols away from the last symbol of a previous SSB; the RO is at least N symbols away from a previous DL symbol.

In the above solutions, N is an integer greater than or equal to 0 and can be determined according to the communication protocol.

In above embodiments, the following factors are not considered in the determination of valid RO: the different frequency domain ranges that the SBFD symbol and the UL symbol can be used for UL transmission; whether a valid RO can span SBFD and non-SBFD symbols; whether the RO can precede an SSB in a PRACH slot; whether an interval between the RO and a symbol where the previous SSB is located can be 0; whether the RO overlaps with the SSB in time domain in the SBFD symbol. Therefore, considering that the frequency domain ranges that the SBFD symbol and the UL symbol can be used for UL transmission are different and whether a valid RO can span SBFD and non-SBFD symbols, how to determine a valid RO is an urgent problem to be solved.

FIG. 2a is flow chart of an information transmission method according to an embodiment. As shown in FIG. 2a, an embodiment of the present disclosure relates to an information transmission method, which is used in a communication system 100, and the method includes the following steps.

Step S2101: a network device sends first information.

In some embodiments, the network device sends the first information to a terminal.

In some embodiments, the terminal may be a first type of terminal.

In some embodiments, the first type of terminal is a terminal that is capable to recognize an SBFD time-frequency configuration (SBFD aware UE).

In some embodiments, the second type of terminal in the present disclosure is a terminal that is unable to recognize an SBFD time-frequency configuration (non-SBFD aware UE).

In some embodiments, the first information is used for determining a configuration of a random access channel occasion (RO) associated with a subband full duplex (SBFD) symbol.

In some embodiments, the configuration of the RO includes: a time domain position of the RO and/or a frequency domain position of the RO.

In some embodiments, the time domain position may include at least one of the following: a time domain resource range of the RO, a starting position of a time domain resource of the RO, and an ending position of a time domain resource of the RO.

In some embodiments, the frequency domain position may include at least one of the following: a frequency domain resource range of the RO, a starting position of a frequency domain resource of the RO, and an ending position of a frequency domain resource of the RO.

In some embodiments, the terminal is a terminal supporting SBFD. The terminal supporting SBFD may include a terminal capable of recognizing a SBFD symbol.

In some embodiments, the terminal supporting SBFD may be the first type of terminal.

In some embodiments, the first type of terminal can use an UL subband (SB) resource of the SBFD symbol for uplink transmission and/or use a DL SB resource of the SBFD symbol for downlink transmission.

In some embodiments, the RO is used for the terminal to send a PRACH signal to the access network device to initiate random access.

In some embodiments, the SBFD symbol is a symbol including one UL subband and at least one DL subband in a frequency domain.

In some embodiments, a symbol may include an Orthogonal Frequency Division Multiplexing (OFDM) symbol.

In some embodiments, the RO associated with the SBFD symbol is determined based on a relationship between the frequency domain position and/or time domain position of the RO and the SBFD symbol.

In some embodiments, the RO associated with the SBFD symbol includes at least one of the following: the time domain position of the RO being within the SBFD symbol; the time domain position of the RO being partially within the SBFD symbol; a frequency domain range of the RO on the SBFD symbol being within an UL transmission frequency domain range of the SBFD symbol; or a frequency domain range of the RO on the SBFD symbol being partially within an UL transmission frequency domain range of the SBFD symbol.

In some embodiments, a non-SBFD symbol include an UL symbol, a DL symbol, and an F symbol.

In some embodiments, as shown in FIG. 1c, an RO in the UL subband (SB) is the RO associated with the SBFD symbol.

In some embodiments, the configuration of the RO may be a configuration index, in which the configuration index may be used to determine an RO time domain. For example, the configuration index may be prach-ConfigurationIndex.

In some embodiments, the first information is also used for at least one of the following: a mapping relationship between an RO and an SSB index; or a number of preamble codes corresponding to one SSB.

In some embodiments, the mapping relationship between the RO and the SSB index includes: a mapping relationship between RO and a number of SSB indices.

In some embodiments, the mapping relationship between RO and the number of SSB indices is used to indicate the number of SSB indices mapped to the RO.

In some embodiments, the terminal can determine a valid RO for transmitting a PRACH signal based on the configuration of the RO indicated by the first information.

In some embodiments, the first information may include a TDD uplink and downlink transmission common configuration.

In some embodiments, the TDD uplink and downlink transmission common configuration is used to configure a carrier component as a non-SBFD symbol.

In some embodiments, the non-SBFD symbol includes at least one of the following: a DL symbol; an UL symbol; or an F symbol.

In some embodiments, the TDD-UL-DL-ConfigCommon configuration may indicate a TDD uplink and downlink transmission common configuration.

In some embodiments, the TDD-UL-DL-ConfigCommon configuration may be a cell-granular configuration.

In some embodiments, the first information may not include the TDD uplink and downlink transmission common configuration.

In some embodiments, when the first information does not include the TDD uplink and downlink transmission common configuration, the carrier component may be an F symbol.

In some embodiments, the first information includes: a semi-static SBFD configuration.

In some embodiments, the first information includes: a TDD uplink and downlink transmission common configuration and/or a semi-static SBFD configuration.

In some embodiments, the TDD uplink and downlink transmission common configuration may configure a carrier component as a non-SBFD symbol, and the semi-static SBFD configuration may configure the non-SBFD symbol as an SBFD symbol.

In some embodiments, the first information is used to indicate at least one of: a first random access channel (RACH) resource for random access (RA) of a first type of terminal and a second type of terminal; or a second RACH resource for RA of a second type of terminal and a third RACH resource for RA of a first type of terminal.

In some embodiments, the first type of terminal is a terminal that is capable to recognize an SBFD time-frequency configuration (an SBFD aware UE).

In some embodiments, the second type of terminal is a terminal that is unable to recognize an SBFD time-frequency configuration (a non-SBFD aware UE).

In some embodiments, one set of RACH resources is configured through the first information and are used for the non-SBFD aware UE and the SBFD aware UE, and the set of RACH resources are called first RACH resources.

In some embodiments, two sets of RACH resources are configured through the first information and are used for the non-SBFD aware UE and the SBFD aware UE respectively. The two sets of RACH resources are respectively called second RACH resources and third RACH resources.

In some embodiments, the SBFD aware UE can use or is able to use an RO in the second RACH resource.

In some embodiments, an RO in the first RACH resource, the second RACH resource and/or the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol.

In some embodiments, the first type of SBFD symbol is a symbol configured as a flexible F symbol by a TDD-UL-DL-ConfigCommon, or a symbol without a TDD-UL-DL-ConfigCommon configuration and configured as an SBFD symbol; the second type of SBFD symbol is a symbol configured as a DL symbol by a TDD-UL-DL-ConfigCommon and configured as an SBFD symbol.

In some embodiments, one set of RACH resources is configured for the non-SBFD aware UE and the SBFD aware UE, and the one set of RACH resources are referred to as first RACH resources; two sets of RACH resources are configured for the non-SBFD aware UE and the SBFD aware UE, respectively, and the two sets of RACH resources are referred to as second RACH resources and third RACH resources, respectively.

In some embodiments, the SBFD aware UE can use or is able to use an RO in the second RACH resource.

In some embodiments, the ROs included in the first RACH resource, the second RACH resource, and the third RACH resource include at least one of the following RO categories: a first type of RO, which is an RO that includes a non-SBFD symbol only and does not include an SBFD symbol; a second type of RO, which is an RO that includes an SBFD (legacy F) and does not include an SBFD (legacy DL); in which, for the SBFD (legacy F), the TDD-UL-DL-ConfigCommon is configured as F or there is no TDD-UL-DL-ConfigCommon configuration, and it is configured as an SBFD symbol; for the SBFD (legacy DL), the TDD-UL-DL-ConfigCommon is configured as a DL, and it is configured as an SBFD symbol; or a third type of RO, which is an RO including an SBFD (legacy DL).

In some embodiments, conditions for determining valid ROs in the second type of RO and the third type of RO may be different.

In some embodiments, in the third RACH resource, a valid RO in the first type of RO, the second type of RO and/or the third type of RO is determined using the conditions for determining a valid RO in the present disclosure.

In some embodiments, in the third RACH resource, the first type of RO is an invalid RO, and a valid RO in the second type of RO and/or the third type of RO is determined using the conditions for determining a valid RO in the present disclosure.

In some embodiments, in the third RACH resource, the first type of RO is an invalid RO, and in the second type of RO and/or the third type of RO, an RO is an invalid RO in a case that a symbol where the RO is located includes at least one non-SBFD symbol. Valid ROs are determined based on the conditions in the present disclosure from ROs other than the invalid ROs.

Step S2102: the terminal determines whether to allow a valid RO to include an SBFD symbol and a non-SBFD symbol to send a PRACH signal.

In some embodiments, a communication protocol may specify whether the valid RO is allowed to include the SBFD symbol and the non-SBFD symbol to send the PRACH signal.

In some embodiments, the terminal may determine, according to the communication protocol, whether to allow the valid RO to include the SBFD symbol and the non-SBFD symbol to send the PRACH signal, or not to allow the valid RO to include the SBFD symbol and the non-SBFD symbol to send the PRACH signal.

In some embodiments, that the valid RO includes the SBFD symbol and the non-SBFD symbol may means that the valid RO include both the SBFD symbol and the non-SBFD symbol.

In some embodiments, that the valid RO does not include the SBFD symbol and the non-SBFD symbol may means that the valid RO does not include both the SBFD symbol and the non-SBFD symbol. For example, the valid RO may include the SBFD symbol and does not include the non-SBFD symbol, or the valid RO may include the non-SBFD symbol and does not include the SBFD symbol.

In some embodiments, that the valid RO includes the SBFD symbol and the non-SBFD symbol may include: the RO is carried by I SBFD symbols and J non-SBFD symbols, where I and J are integers greater than or equal to 1.

In some embodiments, this embodiment does not limit the execution order of step S2101 and step S2102. Step S2101 may be executed first and then step S2102, or step S2102 may be executed first and then step S2101, or they may be executed simultaneously.

Step S2103: the terminal determines whether the RO is a valid RO.

In some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

In some embodiments, an UL symbol is configured as a UL symbol by TDD-UL-DL-ConfigCommon and is not configured as an SBFD symbol.

In some embodiments, a DL symbol is configured as a DL symbol by TDD-UL-DL-ConfigCommon and is not configured as an SBFD symbol.

In some embodiments, a valid RO may satisfy at least one of the following conditions5-0 to 5-8.

Condition 5-0: the RO is within a UL symbol; in which the UL symbol is configured as UL by TDD-UL-DL-ConfigCommon and is not configured as an SBFD symbol.

Condition 5-1: in a PRACH slot, the RO does not precede an SSB.

Condition 5-2: there is at least N symbols between the RO and a symbol where a previous SSB is located.

Condition 5-3: the RO has no overlap with a time domain of an SSB on a non-SBFD symbol.

Condition 5-4: there is at least N symbols between the RO and a previous DL symbol; in which the DL symbol is configured as DL by TDD-UL-DL-ConfigCommon and is not configured as an SBFD symbol.

Condition 5-5: the RO does not overlap with outside of an UL subband on a SBFD symbol.

Condition 5-6: the RO does not include an SBFD and a non-SBFD symbol at the same time (i.e., valid RO cannot span SBFD and non-SBFD symbols).

Condition 5-7: the RO is on an SBFD symbol (i.e. the valid RO can only be on the SBFD symbol).

Condition 5-8: the RO is on a non-SBFD symbol (i.e., the valid RO can only be on the non-SBFD symbol).

In some embodiments, the terminal determines whether the RO is a valid RO according to the configuration of the RO.

In some embodiments, determining whether the RO is a valid RO according to the configuration of the RO includes: determining whether the RO is a valid RO based at least on whether the valid RO is allowed to include an SBFD symbol and a non-SBFD symbol, and the configuration of the RO.

In some embodiments, the conditions for the UE to determine whether the RO is a valid RO may be different for allowing the valid RO to include the SBFD symbol and the non-SBFD symbol or not allowing the valid RO to include the SBFD symbol and the non-SBFD symbol.

In some embodiments, determining whether the RO is a valid RO based at least on whether the valid RO is allowed to include the SBFD symbol and the non-SBFD symbol and the configuration of the RO includes: determining that the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

In some embodiments, the first condition may be specified by a communication protocol.

In some embodiments, the first condition may be indicated by the network device.

In some embodiments, the RO not including an SBFD symbol and non-SBFD symbol, includes one of the following: in a time domain range of the RO, the RO being on a non-SBFD symbol, for example, RO being on an F symbol; or in a time domain range of the RO, the RO being on an SBFD symbol, for example, the RO being on an UL subband in the SBFD symbol.

In some embodiments, if the first information does not include a TDD uplink and downlink transmission common configuration, and the first information includes a semi-static SBFD configuration, the first condition includes at least one of the following: the RO being within an F symbol or the RO being within an SBFD symbol; in a PRACH slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol. In this embodiment, the RO being separated from a last symbol of a symbol where an SSB preceding a time domain position of the RO is located by at least N symbols in a time domain may means that a first symbol of a symbol where the RO is located are separated from the last symbol of the symbol where the SSB preceding the time domain position of the RO by at least N symbols in the time domain.

In some embodiments, the first information not including the TDD uplink and downlink transmission common configuration includes: the network device does not configure the TDD uplink and downlink transmission common configuration.

In some embodiments, when the first information does not include the TDD uplink and downlink transmission common configuration, symbols on a carrier component are all F symbols.

In some embodiments, a semi-static SBFD configuration may be used to configure the F symbol on the carrier component as an SBFD symbol.

In some embodiments, N may be specified by a communication protocol or indicated by the network device.

In some embodiments, N may be represented by N.

In some embodiments, if the first information does not include the TDD uplink and downlink transmission common configuration, and the first information includes a semi-static SBFD configuration, the first condition includes: the RO being within an F symbol or the RO being within an SBFD symbol; in a PRACH slot, a time domain position of the RO not preceding a time domain position of an SSB; the RO being separated from a last symbol of a symbol where an SSB preceding a time domain position of the RO is located by at least N symbols in the time domain, where N is an integer greater than or equal to 0; the RO having no overlap with a time domain position of an SSB on a non-SBFD symbol; the RO having no overlap with outside of an UL subband on the SBFD symbol.

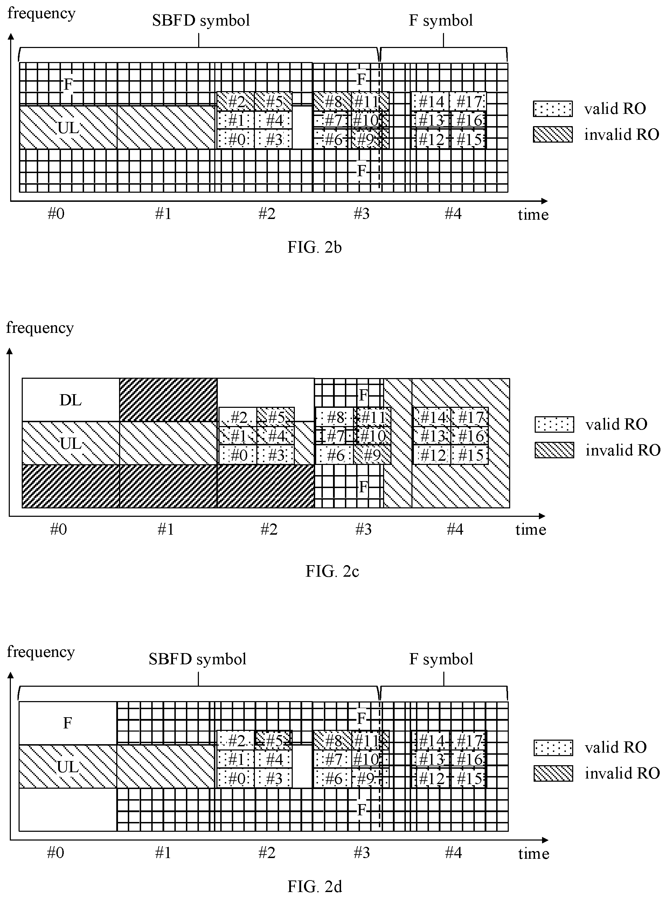

For example, as shown in FIG. 2b , in slot #3, symbols, such as orthogonal frequency division multiplexing symbols (OFDM symbols, OS) #0 to 10 are SBFDs, OS #11-13 are F. RO #9, 10, 11 are on both an SBFD symbol and a non-SBFD symbol (UL, DL, F), and are determined as invalid ROs.

For example, as shown in FIG. 2b, RO#0, 1, 3, 4, 6, 7 are in the SBFD symbol, and RO#12-17 are in the F symbol. In the PRACH slot, the time domain position of RO#0, 1, 3, 4, 6, 7, 12-17 do not precede the time domain position of the SSB; the time domain position of RO#0, 1, 3, 4, 6, 7, 12-17 is spaced by at least N symbols in the time domain from the last symbol of a symbol of a previous SSB. In this case, RO#0, 1, 3, 4, 6, 7, 12-17 are valid ROs.

In some embodiments, the first information includes a TDD uplink and downlink transmission common configuration and a semi-static SBFD configuration, and the first condition includes at least one of the following: the RO being within an UL symbol; wherein an UL symbol being a symbol that is configured as an UL symbol by the TDD-UL-DL-ConfigCommon, and is not configured as an SBFD symbol.

In some embodiments, the RO is carried by an UL symbol configured by the TDD uplink and downlink transmission common configuration, and the UL symbol is a symbol configured as an UL symbol by TDD-UL-DL-ConfigCommon and is not configured as an SBFD symbol, then the RO is a valid RO.

For example, as shown in FIG. 2c, in slot #3, OS #0-10 are SBFD, and OS #11-13 are UL. RO #9, 10, 11 are on both the SBFD symbol and non-SBFD symbol, thus are determined as invalid ROs.

For example, as shown in FIG. 2c, RO# 12 to 17 are within the UL symbol, and the UL symbol is a symbol configured as an UL symbol by the TDD-UL-DL-ConfigCommon and is not configured as an SBFD symbol. In this case, RO# 12 to 17 are valid ROs.

In some embodiments, the first information includes a TDD uplink and downlink transmission common configuration and a semi-static SBFD configuration, and the first condition includes at least one of the following: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which the DL symbol is a symbol configured as a DL symbol by TDD-UL-DL-ConfigCommon and is not configured as an SBFD symbol, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In some embodiments, the first information includes a TDD uplink and downlink transmission common configuration and a semi-static SBFD configuration, and the first condition includes: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which the DL symbol is a symbol configured as a DL symbol by TDD-UL-DL-ConfigCommon and is not configured as an SBFD symbol, in which N is an integer greater than or equal to 0; the RO having no overlap with a time domain position of an SSB on a non-SBFD symbol; the RO having no overlap with outside of an UL subband on the SBFD symbol.

For example, as shown in FIG. 2c, in slot #3, OS #0-10 are SBFD, and OS #11-13 are UL. RO #9, 10, 11 are on both the SBFD and the non-SBFD symbol, thus are determined as invalid ROs.

In this embodiment, the RO being separated from the DL symbol preceding the time domain position of the RO by at least N symbols may means that a first symbol of a symbol where the RO is located is separated from the DL symbol preceding the time domain position of the RO by at least N symbols.

For example, as shown in FIG. 2c, RO#0, 1, 3, 4, 6, 7 are in the SBFD symbol, and RO#12-17 are in the UL symbol; in the PRACH slot, time domain positions of RO#0, 1, 3, 4, 6, 7, 12-17 do not preceding a time domain position of an SSB; time domain positions of RO#0, 1, 3, 4, 6, 7, 12-17 are spaced from a last symbol of a symbol of a previous SSB by at least N symbols in the time domain; time domain positions of RO#0, 1, 3, 4, 6, 7, 12-17 are spaced from a previous DL symbol by at least N symbols in the time domain; in this case, RO#0, 1, 3, 4, 6, 7, 12-17 are valid ROs.

In some embodiments, determining whether the RO is a valid RO based at least on whether the valid RO is allowed to include an SBFD symbol and a non-SBFD symbol and the configuration of the RO includes: determining that the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

In some embodiments, the second condition may be specified by a communication protocol.

In some embodiments, the second condition may be indicated by the network device.

In some embodiments, that the RO includes the SBFD symbol and the non-SBFD symbol, includes: in a time domain range of the RO, the RO is carried by the SBFD symbol and the non-SBFD symbol.

In some embodiments, if the first information does not include a TDD uplink and downlink transmission common configuration, and the first information includes a semi-static SBFD configuration, the second condition includes at least one of the following: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

In some embodiments, if the first information does not include a TDD uplink and downlink transmission common configuration, and the first information includes a semi-static SBFD configuration, the second condition includes: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol.

In some embodiments, N may be specified by a communication protocol or indicated by the network device.

In some embodiments, N may be represented by N.

In some embodiments, the RO being separated from a last symbol of a symbol where an SSB preceding a time domain position of the RO is located by at least N symbols in a time domain includes: in the time domain, a first symbol of the RO is separated from the last symbol of the SSB by at least N symbols. For example, as shown in FIG. 2d, in slot #3, OS#0-10 are SBFD, OS#11-13 are F, RO#9, 10 are in both the SBFD symbol and the non-SBFD symbol; RO#0, 1, 3, 4, 6, 7 are in the SBFD symbol, and RO#12-17 are in the F symbol; in the PRACH slot, the time domain positions of RO#0, 1, 3, 4, 6, 7, 9, 10, 12-17 do not precede the time domain position of the SSB; the time domain positions of RO#0, 1, 3, 4, 6, 7, 9, 10, 12-17 are spaced by at least N symbols in the time domain from the last symbol of a previous SSB symbol. In this case, RO#0, 1, 3, 4, 6, 7, 9, 10, 12-17 are valid ROs.

In some embodiments, the first information includes a TDD uplink and downlink transmission common configuration and a semi-static SBFD configuration, and the second condition includes at least one of the following: the RO being within an UL symbol; wherein an UL symbol being a symbol that is configured as a UL symbol and is not configured as an SBFD symbol.

In some embodiments, the first information includes a TDD uplink and downlink transmission common configuration and a semi-static SBFD configuration, and the second condition includes: the RO being within an UL symbol.

In some embodiments, if the RO is an UL symbol configured by the TDD uplink and downlink transmission common configuration, and the UL symbol is a symbol configured as a UL symbol by TDD-UL-DL-ConfigCommon and is not configured as an SBFD symbol, then the RO is a valid RO.

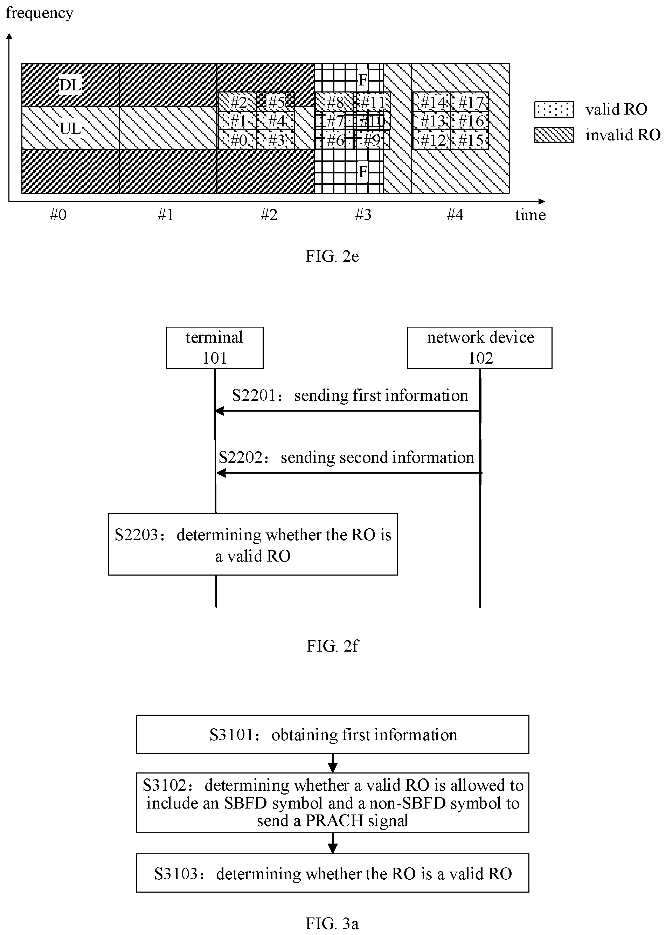

For example, as shown in FIG. 2e, RO# 12 to 17 are within the UL symbol, and the UL symbol is an UL symbol after being configured by the semi-static SBFD configuration. In this case, RO# 12 to 17 are valid ROs.

In some embodiments, the first information includes a TDD uplink and downlink transmission common configuration and a semi-static SBFD configuration, and the second condition includes at least one of the following: in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols; in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In some embodiments, the first information includes a TDD uplink and downlink transmission common configuration and a semi-static SBFD configuration, and the second condition includes: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In some embodiments, N may be specified by a communication protocol or indicated by the network device.

In some embodiments, N may be represented by N.

In some embodiments, the RO being separated from a last symbol of a symbol where an SSB preceding a time domain position of the RO is located by at least N symbols in a time domain includes: in the time domain, a first symbol of the RO is separated from the last symbol of the SSB by at least N symbols. For example, as shown in FIG. 2e, in slot #3, OS#0-10 are SBFD, OS#11-13 are UL, RO#9, 10 are in both the SBFD symbol and the non-SBFD symbol; RO#0, 1, 3, 4, 6, 7 are in the SBFD symbol, and RO#12-17 are in the UL symbol; in the PRACH slot, the time domain positions of RO#0, 1, 3, 4, 6, 7, 9, 10, 12-17 do not precede the time domain position of the SSB; the time domain positions of RO#0, 1, 3, 4, 6, 7, 9, 10, 12-17 are spaced by at least N symbols in the time domain from the last symbol of a previous SSB symbol; the time domain positions of RO#0, 1, 3, 4, 6, 7, 9, 10, 12-17 are separated from a previous DL symbol by at least N symbols in the time domain. In this case, RO#0, 1, 3, 4, 6, 7, 9, 10, 12-17 are valid ROs.

In some embodiments, determining whether the RO is a valid RO according to the configuration of the RO includes: determining that the RO is not the valid RO in a case that the RO includes an SBFD symbol, and a frequency domain range of the RO has an overlapping portion with outside of a frequency domain range of UL transmission on the SBFD symbol.

In some embodiments, in an SBFD symbol, a frequency domain range available for UL transmission on a CC is the frequency domain range of the UL subband.

In some embodiments, in an SBFD symbol, a frequency domain range available for UL transmission on a CC is a frequency domain range of a UL subband and a GB.

In some embodiments, the frequency domain range of UL transmission on the SBFD symbol refers to a frequency domain range of UL transmission on an UL BWP, and the frequency domain range of UL transmission on an UL BWP is a frequency domain range where the frequency domain range of UL transmission on the UL BWP overlaps with the frequency domain range of UL transmission on the CC. Unless otherwise specified, in this embodiment, the frequency domain range of UL transmission on the SBFD symbol refers to the frequency domain range of UL transmission on the UL BWP.

In some embodiments, a frequency domain range of an RO having an overlapping part with outside of a frequency domain range of UL transmission on a SBFD symbol, includes: the first sub-frequency domain range in the frequency domain range of the RO is located within the frequency domain range of the UL transmission on the SBFD symbol, and a second sub-frequency domain range in the frequency domain range of the RO is located outside the frequency domain range of the UL transmission on the SBFD symbol.

For example, as shown in FIG. 2b , FIG. 2c , FIG. 2d and FIG. 2e, it is determined that the RO is not a valid RO in a case that a portion of the frequency domain ranges of RO#2, 5, 8 and 11 are respectively outside the frequency domain range of UL transmission on the SBFD symbol.

In some embodiments, the time domain position configured by the configuration of the RO includes an SBFD symbol, and a frequency domain range of the RO has no overlapping portion with outside of a frequency domain range of UL transmission on the SBFD symbol.

In some embodiments, the first information includes: a TDD uplink and downlink transmission common configuration and/or a semi-static SBFD configuration.

In some embodiments, the first type terminal does not expect an RO to be a valid RO for the second type terminal, and it is an invalid RO for the first type terminal. The second type terminal does not support the SBFD symbol, that is, it cannot identify a symbol as an SBFD symbol. The first type terminal supports the SBFD symbol, that is, it can identify a symbol as an SBFD symbol.

For example, as shown in FIG. 2b, the TDD uplink and downlink transmission common configuration is not configured, an initial state of a symbol where RO#8 is located is an F symbol, and the F symbol is configured as an SBFD through a semi-static SBFD. The frequency domain range of RO#8 overlaps with outside of a frequency domain range of UL transmission of the SBFD symbol. Therefore, for the first type of terminal, RO#8 is an invalid RO. However, for the second type of terminal, the symbol where RO#8 is located is the F symbol, which is a valid RO.

In some embodiments, the RO configured by the configuration of the RO includes an SBFD symbol or a non-SBFD symbol.

In some embodiments, the first type terminal does not expect an RO to be a valid RO for the second type terminal, and it is an invalid RO for the first type terminal. The second type terminal does not support the SBFD symbol, that is, it cannot identify a symbol as an SBFD symbol. The first type terminal supports the SBFD symbol, that is, it can identify a symbol as an SBFD symbol.

For example, the TDD uplink and downlink transmission common configuration is not configured, or the TDD uplink and downlink transmission common configuration is configured and the configuration symbol #m is F. For example, for the first type of terminal, when a valid RO cannot span the SBFD symbol and the non-SBFD symbol, symbol #m is configured as an SBFD symbol through a semi-static SBFD, and some ROs span the SBFD symbol and non-SBFD symbol, and the non-SBFD symbol is an F symbol or an UL symbol, then the RO is invalid. As shown in FIG. 2b and FIG. 2c, RO#9, 10, and 11 span the SBFD symbol and non-SBFD symbol (UL symbol), respectively. Therefore, for the first type of terminal, RO#9, 10, and 11 are all invalid ROs. However, for the second type of terminal, the symbols where RO#9, 10, and 11 are located is F or UL, which are valid ROs.

In some embodiments, the term "information" can be interchangeable with terms such as "message", "signal", "signaling", "report", "configuration", "indication", "instruction", "command", "channel", "parameter", "field", and "data".

In some embodiments, the term "send" can be interchangeable with terms such as "transmit", "report", and "transmission".

The information transmission method involved in embodiments of the present disclosure may include at least one of step S2101 to step S2103. For example, step S2101 may be implemented as an independent embodiment, step S2102 may be implemented as an independent embodiment, and step S2103 may be implemented as an independent embodiment. For example, step S2101 combined with step S2103 may be implemented as an independent embodiment. However, it is not limited thereto.

In some embodiments, step S2101 and step S2102 may be executed in an interchangeable order or simultaneously.

In some embodiments, step S2101 and step S2102 are optional, and one or more of these steps may be omitted or replaced in different embodiments.

In embodiments of the present disclosure, part or all of the steps and their optional implementations may be arbitrarily combined with part or all of the steps in other embodiments, or may be arbitrarily combined with optional implementations of other embodiments.

FIG. 2f is a flow chart of an information transmission method according to an embodiment. As shown in FIG. 2f, an embodiment of the present disclosure relates to an information transmission method, which is used in a communication system 100, and the method includes the following steps.

Step S2201: a network device sends first information.

In some embodiments, for an optional implementation of step S2201, reference can be made to the optional implementation of step S2101 in FIG. 2a and other related parts of the embodiments involved in FIG. 2a, which are not repeated here.

Step S2202: the network device sends second information.

In some embodiments, the network device sends the second information to the terminal.

In some embodiments, the second information may indicate whether a valid RO is allowed to include an SBFD symbol and a non-SBFD symbol to send a PRACH signal.

In some embodiments, the terminal may determine, according to the second information, whether to allow a valid RO to include an SBFD symbol and a non-SBFD symbol to send a PRACH signal, or not to allow a valid RO to include an SBFD symbol and a non-SBFD symbol to send a PRACH signal.

In some embodiments, that the RO includes an SBFD symbol and a non-SBFD symbol, includes: the RO is carried by I SBFD symbols and J non-SBFD symbols, where I and J are integers greater than or equal to 1.

In some embodiments, the first information and the second information may be the same information or different information.

In some embodiments, this embodiment does not limit an execution order of step S2201 and step S2202. Step S2201 may be executed first and then step S2202, or step S2202 may be executed first and then step S2201, or they may be executed simultaneously.

Step S2203: the terminal determines whether an RO is a valid RO.

In some embodiments, for an optional implementation of step S2203, reference may be made to the optional implementation of step S2103 in FIG. 2a and other related parts of the embodiment involved in FIG. 2a, which are not repeated here.

In some embodiments, the term "information" can be interchangeably with terms such as "message", "signal", "signaling", "report", "configuration", "indication", "instruction", "command", "channel", "parameter", "field", and "data".

In some embodiments, the term "send" can be interchangeable with terms such as "transmit", "report", and "transmission".

The information transmission method involved in embodiments of the present disclosure may include at least one of step S2201 to step S2203. For example, step S2201 can be implemented as an independent embodiment, step S2202 can be implemented as an independent embodiment, and step S2203 can be implemented as an independent embodiment. For example, step S2201 combined with step S2203 can be implemented as an independent embodiment. However, embodiments of the disclosure are not limited to these.

In some embodiments, step S2201 and step S2202 may be executed in an interchangeable order or simultaneously.

In some embodiments, step S2201 and step S2202 are optional, and one or more of these steps may be omitted or replaced in different embodiments.

In embodiments of the present disclosure, part or all of the steps and their optional implementations may be arbitrarily combined with part or all of the steps in other embodiments, or may be arbitrarily combined with optional implementations of other embodiments.

FIG. 3a is a flow chart of an information transmission method according to an embodiment of the present disclosure. As shown in FIG. 3a, an embodiment of the present disclosure relates to an information transmission method, which is executed by a terminal 101, which may be a first type terminal, and the method includes the following steps.

Step S3101: first information is obtained.

In some embodiments, for an optional implementation of step S3101, reference can be made to the optional implementation of step S2101 in FIG. 2a and other related parts of the embodiment involved in FIG. 2a, which are not repeated here.

In some embodiments, the terminal receives the first information sent by the network device, but is not limited thereto, and may also receive the first information sent by other entities.

In some embodiments, the terminal obtains the first information specified by a protocol.

In some embodiments, the terminal obtains the first information from an upper layer(s).

In some embodiments, the terminal performs processing to obtain the first information.

In some embodiments, step S3101 may be omitted, the terminal autonomously implements a function indicated by the first information, or the above function is default or predefined.

Step S3102: it is determined whether a valid RO is allowed to include an SBFD symbol and a non-SBFD symbol to send a PRACH signal.

In some embodiments, for an optional implementation of step S3102, reference may be made to the optional implementation of step S2102 in FIG. 2a and other related parts of the embodiment involved in FIG. 2a, which are not repeated here.

Step S3103: it is determined whether an RO is the valid RO.

In some embodiments, for an optional implementation of step S3103, reference may be made to the optional implementation of step S2103 in FIG. 2a and other related parts of the embodiment involved in FIG. 2a, which are not repeated here.

The information transmission method involved in embodiments of the present disclosure may include at least one of steps S3101 to S3103. For example, step S3101 may be implemented as an independent embodiment, step S3102 may be implemented as an independent embodiment, step S3103 may be implemented as an independent embodiment, step S3101 combined with step S3102 may be implemented as an independent embodiment, step S3101 combined with step S3102 and step S3103 may be implemented as an independent embodiment, but not limited thereto.

In some embodiments, step S3101 and step S3102 may be executed in an interchangeable order or simultaneously.

In some embodiments, step S3101 and step S3102 are optional, and one or more of these steps may be omitted or replaced in different embodiments.

In the embodiments of the present disclosure, part or all of the steps and their optional implementations may be arbitrarily combined with part or all of the steps in other embodiments, or may be arbitrarily combined with optional implementations of other embodiments.

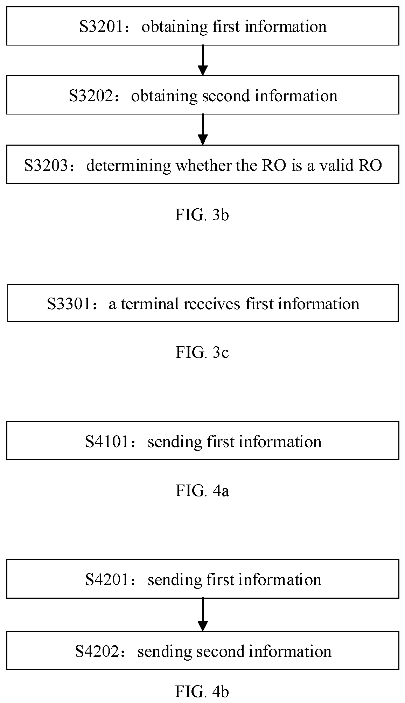

FIG. 3b is a flow chart of an information transmission method according to an embodiment of the present disclosure. As shown in FIG. 3b, an embodiment of the present disclosure relates to an information transmission method, which is executed by a terminal 101, and the method includes the following steps.

Step S3201: first information is obtained.

In some embodiments, for an optional implementation of step S3201, reference may be made to the optional implementation of step S2201 in FIG. 2f and other related parts of the embodiment involved in FIG. 2f, which are not repeated here.

In some embodiments, the terminal receives the first information sent by a network device, but is not limited thereto, and may receive the first information sent by other entities.

In some embodiments, the terminal obtains the first information specified a protocol.

In some embodiments, the terminal obtains the first information from an upper layer(s).

In some embodiments, the terminal performs processing to obtain the first information.

In some embodiments, step S3201 is omitted, the terminal autonomously implements the function indicated by the first information, or the above function is default or predefined.

Step S3202: second information is obtained.

In some embodiments, for an optional implementation of step S3202, reference may be made to the optional implementation of step S2202 in FIG. 2f and other related parts of the embodiment involved in FIG. 2f, which are not repeated here.

In some embodiments, the terminal receives the first information sent by the network device, but is not limited thereto, and may receive the first information sent by other entities.

In some embodiments, the terminal obtains the first information specified by a protocol.

In some embodiments, the terminal obtains the first information from an upper layer(s).

In some embodiments, the terminal performs processing to obtain the first information.

In some embodiments, step S3202 is omitted, the terminal autonomously implements the function indicated by the first information, or the above function is default or predefined.

Step S3203: it is determined whether the RO is a valid RO.

In some embodiments, for an optional implementation of step S3203, reference may be made to the optional implementation of step S2203 in FIG. 2f and other related parts of the embodiment involved in FIG. 2f, which are not repeated here.

The information transmission method involved in embodiments of the present disclosure may include at least one of steps S3201 to S3203. For example, step S3201 may be implemented as an independent embodiment, step S3202 may be implemented as an independent embodiment, step S3203 may be implemented as an independent embodiment, step S3201 combined with step S3202 may be implemented as an independent embodiment, step S3201 combined with step S3202 and step 3203 may be implemented as an independent embodiment, but not limited thereto.

In some embodiments, step S3201 and step S3202 may be executed in an interchangeable order or simultaneously.

In some embodiments, step S3201 and step S3202 are optional, and one or more of these steps may be omitted or replaced in different embodiments.

In the embodiments of the present disclosure, part or all of the steps and their optional implementations may be arbitrarily combined with part or all of the steps in other embodiments, or may be arbitrarily combined with optional implementations of other embodiments.

FIG. 3c is a flow chart of an information transmission method according to an embodiment of the present disclosure. As shown in FIG3c, an embodiment of the present disclosure relates to an information transmission method, which is executed by the terminal 101, and the method includes the following step S3301.

Step S3301: the terminal receives first information.

In some embodiments, the first information is used for determining a configuration of random access channel occasion (RO) associated with a subband full duplex (SBFD) symbol; in which the configuration of the RO includes: a time domain position of the RO and/or a frequency domain position of the RO.

In some embodiments, the terminal determines whether the RO is a valid RO according to the configuration of the RO.

In some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

In some embodiments, the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

In some embodiments, the first type of terminal is a terminal that is capable to recognize an SBFD time-frequency configuration; and the second type of terminal is a terminal that is unable to recognize an SBFD time-frequency configuration.

In some embodiments, an RO in the first RACH resource, the second RACH resource and/or the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by a time division duplex (TDD) uplink (UL) and downlink (DL) transmission common configuration (TDD-UL-DL-ConfigCommon), or a symbol without TDD UL DL transmission common configuration and configured as an SBFD symbol; the second type of SBFD symbol is a symbol configured as a DL symbol by the TDD UL DL transmission common configuration and configured as an SBFD symbol.

In some embodiments, conditions for determining valid ROs in the second type of RO and the third type of RO are different.

In some embodiments, in the third RACH resource, the first type of RO is an invalid RO.

In some embodiments, in the third RACH resource, the first type of RO is an invalid RO, and an RO in the second type of RO and/or the third type of RO is an invalid RO in a case that a symbol where the RO is located includes at least one non-SBFD symbol.

In some embodiments, the terminal determines whether the RO is a valid RO based at least on whether the valid RO is allowed to include an SBFD symbol and a non-SBFD symbol and the configuration of the RO.

In some embodiments, it is determined that the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

In some embodiments, the first information does not include a TDD uplink and downlink transmission common configuration, and the first information includes a semi-static SBFD configuration, and the first condition includes at least one of: the RO being within a flexible F symbol or the RO being within an SBFD symbol; in a PRACH slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In some embodiments, the first information includes a TDD uplink and downlink transmission common configuration and a semi-static SBFD configuration, and the first condition includes at least one of: the RO being within an UL symbol; wherein an UL symbol is a symbol that is configured as a UL symbol and is not configured as an SBFD symbol.

In some embodiments, the first information includes a TDD uplink and downlink transmission common configuration and a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which the DL symbol is a symbol configured as a DL symbol and not configured as an SBFD symbol; N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In some embodiments, it is determined that the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

In some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

In some embodiments, the first information includes a TDD uplink and downlink transmission common configuration and a semi-static SBFD configuration, and the second condition includes at least one of: the RO being within an UL symbol; wherein an UL symbol being a symbol that is configured as a UL symbol and is not configured as an SBFD symbol.

In some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In some embodiments, the method further includes at least one of: determining, by the terminal, whether to allow the valid RO to include an SBFD symbol and a non-SBFD symbol according to a communication protocol; or receiving second information by the terminal, in which the second information indicates whether the valid RO is allowed to include a SBFD symbol and a non-SBFD symbol.

In some embodiments, it is determined that the RO is not the valid RO in a case that the RO includes an SBFD symbol, and a frequency domain range of the RO has an overlapping portion with outside of a frequency domain range of UL transmission on the SBFD symbol.

In some embodiments, the time domain position configured by the configuration of the RO includes an SBFD symbol, and a frequency domain range of the RO has no overlapping portion with outside of a frequency domain range of UL transmission on the SBFD symbol.

In some embodiments, the RO configured by the configuration of the RO includes an SBFD symbol or a non-SBFD symbol.

FIG. 4a is a flow chart of an information transmission method according to an embodiment of the present disclosure. As shown in FIG4a, an embodiment of the present disclosure relates to an information transmission method, which is executed by a network device 102, and the method includes the following step S4101.

Step S4101: first information is sent.

In some embodiments, the first information is used for determining a configuration of random access channel occasion (RO) associated with a subband full duplex (SBFD) symbol.

In some embodiments, the configuration of the RO includes: a time domain position of the RO and/or a frequency domain position of the RO.

In some embodiments, the configuration of the RO is used by a terminal to determine whether the RO is a valid RO.

In some embodiments, the valid RO satisfies at least one of the following conditions: the valid RO being within an uplink (UL) symbol, in which the UL symbol is configured as a UL symbol and not configured as an SBFD symbol; in a physical random access channel (PRACH) slot, a time domain position of the valid RO not preceding a time domain position of a synchronization signal/physical broadcast channel block (SSB); the valid RO being separated from a last symbol of a symbol where an SSB preceding a time domain position of the valid RO is located by at least N symbols in a time domain, in which N is an integer greater than or equal to 0; the valid RO having no overlap with a time domain position of an SSB on a non-SBFD symbol; the valid RO being separated from a downlink (DL) symbol preceding a time domain position of the valid RO by at least N symbols, in which the DL symbol is configured as a DL symbol and not configured as an SBFD symbol; the valid RO having no overlap with outside of an UL subband on the SBFD symbol; the valid RO not including both an SBFD symbol and a non-SBFD symbol; the valid RO being on an SBFD symbol; or the valid RO being on a non-SBFD symbol.

In some embodiments, the first information is configured to indicate at least one of: a first random access channel (RACH) resource for random access (RA) of a first type of terminal and a second type of terminal; or a second RACH resource for RA of a second type of terminal and a third RACH resource for RA of a first type of terminal.

In some embodiments, the first type of terminal is a terminal that is capable to recognize an SBFD time-frequency configuration; and the second type of terminal is a terminal that is unable to recognize an SBFD time-frequency configuration.

In some embodiments, an RO in the first RACH resource, the second RACH resource and the third RACH resource includes at least one of the following categories: a first type of RO, in which the first type of RO is an RO that includes a non-SBFD symbol and does not include an SBFD symbol; a second type of RO, in which the second type of RO is an RO that includes a first type of SBFD symbol and does not include a second type of SBFD symbol; or a third type of RO, in which the third type of RO is an RO including the second type of SBFD symbol. The first type of SBFD symbol is a symbol configured as a flexible F symbol by TDD-UL-DL-ConfigCommon, or a symbol without TDD UL DL transmission common configuration and configured as an SBFD symbol; the second type of SBFD symbol is a symbol configured as a DL symbol by the TDD-UL-DL-ConfigCommon and configured as an SBFD symbol.

In some embodiments, conditions for determining valid ROs in the second type of RO and the third type of RO are different.

In some embodiments, in the third RACH resource, the first type of RO is an invalid RO.

In some embodiments, in the third RACH resource, the first type of RO is an invalid RO, and an RO in the second type of RO and/or the third type of RO is an invalid RO in a case that a symbol where the RO is located includes at least one non-SBFD symbol.

In some embodiments, the configuration of the RO is configured to determine whether the RO is a valid RO based at least on whether the valid RO is allowed to include an SBFD symbol and a non-SBFD symbol.

In some embodiments, it is determined that the RO is the valid RO in a case that the valid RO is not allowed to include both an SBFD symbol and a non-SBFD symbol, the RO includes an SBFD symbol or a non-SBFD symbol, and the configuration of the RO satisfies a first condition.

In some embodiments, the first information does not include a TDD uplink and downlink transmission common configuration, and the first information includes a semi-static SBFD configuration, and the first condition includes at least one of: the RO being within a flexible F symbol or the RO being within an SBFD symbol; in a PRACH slot, a time domain position of the RO not preceding a time domain position of a synchronization signal/physical broadcast block (SSB); the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In some embodiments, the first information includes a TDD uplink and downlink transmission common configuration and a semi-static SBFD configuration, and the first condition includes at least one of: the RO being within an UL symbol; wherein an UL symbol is a symbol that is configured as a UL symbol and is not configured as an SBFD symbol.

In some embodiments, the first information is configured with a TDD uplink, and the first information includes downlink transmission common configuration and a semi-static SBFD configuration, and the first condition includes at least one of: the RO being within an SBFD symbol or the RO being within a non-SBFD symbol; in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which the DL symbol is a symbol configured as a DL symbol and not configured as an SBFD symbol; N is an integer greater than or equal to 0; the RO having no overlap with a time domain position of an SSB on a non-SBFD symbol; the RO having no overlap with outside of an UL subband on the SBFD symbol; the RO being on an SBFD symbol; or the RO being on a non-SBFD symbol.

In some embodiments, it is determined that the RO is the valid RO in a case that the valid RO is allowed to include an SBFD symbol and a non-SBFD symbol, the RO includes an SBFD symbol and/or a non-SBFD symbol, and the configuration of the RO satisfies a second condition.

In some embodiments, the first information does not include a TDD uplink and downlink transmission common configuration, and the first information includes a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain, in which N is an integer greater than or equal to 0; the RO having no overlap with a time domain position of an SSB on a non-SBFD symbol; or the RO having no overlap with outside of an UL subband on the SBFD symbol.

In some embodiments, the first information includes a TDD uplink and downlink transmission common configuration and a semi-static SBFD configuration, and the second condition includes at least one of: the RO being within an UL symbol; or an UL symbol being a symbol that is configured as a UL symbol and is not configured as an SBFD symbol.

In some embodiments, the first information includes a TDD uplink and downlink transmission common configuration and a semi-static SBFD configuration, and the second condition includes at least one of: in a PRACH slot, a time domain position of the RO not preceding a time domain position of an SSB; the RO being separated from a last symbol of a symbol where an SSB preceding a time domain position of the RO is located by at least N symbols in a time domain; the RO being separated from a DL symbol preceding a time domain position of the RO by at least N symbols, in which N is an integer greater than or equal to 0; the RO being separated from a DL symbol preceding a time domain position of the RO by at least N symbols, in which the DL symbol is configured as a DL symbol and not configured as an SBFD symbol; the RO having no overlap with a time domain position of an SSB on a non-SBFD symbol; or the RO having no overlap with outside of an UL subband on the SBFD symbol.

In some embodiments, the method further includes: sending second information.

In some embodiments, the second information indicates whether the valid RO is allowed to include a SBFD symbol and a non-SBFD symbol.

In some embodiments, it is determined that the RO is not the valid RO in a case that the RO includes an SBFD symbol, and a frequency domain range of the RO has an overlapping portion with outside of a frequency domain range of UL transmission on the SBFD symbol.

In some embodiments, the time domain position configured by the configuration of the RO includes an SBFD symbol, and a frequency domain range of the RO has no overlapping portion with outside of a frequency domain range of UL transmission on the SBFD symbol.

In some embodiments, the RO configured by the configuration of the RO includes an SBFD symbol or a non-SBFD symbol.

In some embodiments, for an optional implementation of step S4101, reference may be made to the optional implementation of step S2101 in FIG. 2a and other related parts of the embodiment involved in FIG. 2a, which are not repeated here.

FIG. 4b is a flow chart of an information transmission method according to an embodiment of the present disclosure. As shown in FIG. 4b, an embodiment of the present disclosure relates to an information transmission method, which is executed by a network device 102, and the method includes the following steps.

Step S4201: first information is sent.

In some embodiments, for an optional implementation of step S4201, reference may be made to the optional implementation of step S2201 in FIG. 2f and other related parts of the embodiment involved in FIG. 2f, which are not repeated here.

Step S4202: second information is sent.

In some embodiments, for an optional implementation of step S4202, reference may be made to the optional implementation of step S2202 in FIG. 2f and other related parts of the embodiment involved in FIG. 2f, which are not repeated here.

The information transmission method involved in embodiments of the present disclosure may include at least one of step S4201 to step S4202. For example, step 4201 may be implemented as an independent embodiment, step S4201 may be implemented as an independent embodiment, step S4201 combined with step S4202 may be implemented as an independent embodiment, but not limited thereto.

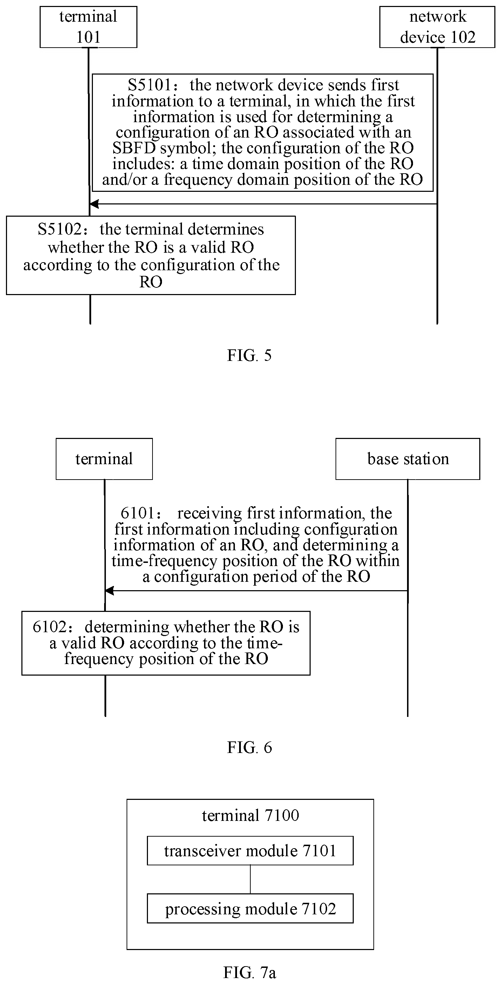

FIG. 5 is an interactive schematic diagram of an information transmission method according to an embodiment of the present disclosure. As shown in FIG. 5, an embodiment of the present disclosure relates to an information transmission method, which is used in a communication system 100, and the method includes one of the following steps.

Step S5101: a network device sends first information to a terminal, in which the first information is used for determining a configuration of an RO associated with an SBFD symbol; the configuration of the RO includes: a time domain position of the RO and/or a frequency domain position of the RO.

For an optional implementation method of step S5101, reference may be made to step S2101 of FIG. 2a, step S2201 of FIG. 2f, step S3101 of FIG. 3a, step S3201 of FIG. 3b, step S4101 of FIG. 4a, step S4201 of FIG. 4b and other related parts in the embodiments involved in FIG. 2a, FIG. 2f, FIG. 3a, FIG. 3b, FIG. 4a and FIG. 4b, which are not repeated here.

Step S5102: the terminal determines whether the RO is a valid RO according to the configuration of the RO.

For an optional implementation method of step S5102, reference may be made to step S2103 of FIG. 2f, step S2203 of FIG. 2f, step S3103 of FIG. 3a, step S3203 of FIG. 3b and other related parts in the embodiments involved in FIG. 2a, FIG. 2f, FIG. 3a and FIG. 3b, which are not repeated here.

In some embodiments, the above method may include the methods of the above-mentioned communication system side, terminal side, access network device side, core network side, etc., which are not repeated here.

An example is provided below according to any of the above embodiments:

Steps on the terminal side are shown in FIG. 6, including the following steps.

Step 6101: first information is received, the first information including configuration information of an RO, and a time-frequency position of the RO within a configuration period of the RO is determined.

Step 6102: it is determined whether the RO is a valid RO according to the time-frequency position of the RO.

In some embodiments, one set of RACH resources is configured for a non-SBFD aware UE and an SBFD aware UE, and the set of RACH resources are referred to as first RACH resources; two sets of RACH resources are configured for a non-SBFD aware UE and an SBFD aware UE respectively, and the two sets of RACH resources are referred to as second RACH resources and third RACH resources, respectively.

In some embodiments, the SBFD aware UE may use or be able to use an RO in the second RACH resource.

In some embodiments, an RO in the first RACH resource, the second RACH resource or the third RACH resource includes at least one of the following categories: a first type of RO, which is an RO that includes a non-SBFD symbol only and does not include an SBFD symbol; a second type of RO, which is an RO that includes an SBFD (legacy F) and does not include an SBFD (legacy DL), in which, for the SBFD (legacy F), TDD-UL-DL-ConfigCommon is configured as F or there is no TDD-UL-DL-ConfigCommon configuration, and it is configured as an SBFD symbol; for the SBFD (legacy DL), TDD-UL-DL-ConfigCommon is configured as DL, and it is configured as an SBFD symbol; or a third type of RO, which is an RO including an SBFD (legacy DL).

In some embodiments, a valid RO may satisfy at least one of the following conditions5-0 to 5-8.

Condition 5-0: the RO is within a UL symbol; in which the UL symbol is configured as UL by TDD-UL-DL-ConfigCommon and is not configured as an SBFD symbol.

Condition 5-1: in a PRACH slot, the RO does not precede an SSB.

Condition 5-2: there is at least N symbols between the RO and a symbol where a previous SSB is located.

Condition 5-3: the RO has no time-domain overlap with an SSB on a non-SBFD symbol.

Condition 5-4: there is at least N symbols between the RO and a previous DL symbol; in which the DL symbol is configured as DL by TDD-UL-DL-ConfigCommon and is not configured as an SBFD symbol.

Condition 5-5: the RO does not overlap with outside of an UL subband on a SBFD symbol.

Condition 5-6: the RO does not include an SBFD and a non-SBFD symbol at the same time (i.e., valid RO cannot span SBFD and non-SBFD symbols).

Condition 5-7: the RO is on an SBFD symbol (i.e. the valid RO can only be on the SBFD symbol).

Condition 5-8: the RO is on a non-SBFD symbol (i.e., the valid RO can only be on the non-SBFD symbol).
1. the second information indicates/a protocol defaults that a valid RO cannot span SBFD and non-SBFD symbols.

(TDD uplink and downlink transmission common configuration) tdd-UL-DL-ConfigurationCommon is not configured, and there is a semi-static SBFD (semi-SBFD) configuration.

Solution 1-2: a valid RO meets at least one of the following conditions 1-2-1-1 to 1-2-1-7.

Condition 1-2-1-1: in a PRACH slot, the RO does not precede an SSB (does not precede a SS/PBCH block in the PRACH slot).

Condition 1-2-1-2: there is at least N symbols between the RO and a last symbol of a symbol where a previous SSB is located.

Condition 1-2-1-3: the RO has no overlap with a time domain position of an SSB in non-SBFD symbol.

Condition 1-2-1-4: the RO has no overlap with outside of an UL subband on the SBFD symbol.

Condition 1-2-1-5: the RO is within an F symbol or the RO is within an SBFD symbol (i.e., a valid RO can be in an SBFD symbol or a non-SBFD symbol).

Condition 1-2-1-6: the RO is on an SBFD symbol (i.e. a valid RO can be on an SBFD symbol only).

Condition 1-2-1-7: the RO is on a non-SBFD symbol (i.e., a valid RO can be on a non-SBFD symbol only).

An example is as follows. In slot #3 of FIG. 2b, OS (OFDM symbol) #0-10 are SBFD, OS #11-13 are F. RO #9, 10, 11 are in both SBFD and non-SBFD symbols (UL, DL, F), thus are determined as invalid ROs.

TDD-UL-DL-ConfigurationCommon has a configuration, and semi-static SBFD (semi-SBFD) configuration is configured.

Solution 2-2-1: a valid RO satisfies at least one of conditions 2-2-1-1 and 2-2-1-2.

Condition 2-2-1-1: the RO is within an UL symbol.

Condition 2-2-1-2: the UL symbol in condition 2-1-1-1 is configured as an UL by TDD-UL-DL-ConfigCommon and is not configured as an SBFD symbol.

Solution 2-2-2: a valid RO meets at least one of the following conditions 2-2-1-1 to 2-2-1-9.

Condition 2-2-2-1: in a PRACH slot, the RO does not precede an SSB.

Condition 2-2-2-2: there is at least N symbols between the RO and a last symbol of a symbol where a previous SSB is located.

Condition 2-2-2-3: there is at least N symbols between the RO and a previous DL symbol.

Condition 2-2-2-4: the RO does not overlap with a time domain of an SSB on a non-SBFD symbol.

Condition 2-2-2-5: the RO does not overlap with outside of an UL subband on a SBFD symbol.

Condition 2-2-2-6: the RO is in an SBFD symbol or the RO is in a non-SBFD symbol (i.e., a valid RO can be in an SBFD symbol or a non-SBFD symbol).

Condition 2-2-2-7: the RO is on the SBFD symbol (i.e. a valid RO can be on the SBFD symbol only).

Condition 2-2-2-8: the RO is on a non-SBFD symbol (i.e., a valid RO can be on a non-SBFD symbol only).

Condition 2-2-2-9: the DL symbol is configured as DL in TDD-UL-DL-ConfigCommon and is not configured as an SBFD symbol.

An example is as follows. In slot #3 of FIG. 2c, OS#0-10 are SBFD, OS#11-13 are UL. RO#9, 10, 11 are in both SBFD and non-SBFD symbols, thus are determined as invalid ROs.

2. The second information indicates/agrees on that a valid RO can span SBFD and non-SBFD symbols.

Tdd-UL-DL-ConfigurationCommon is not configured, and there is a semi-SBFD configuration.

Solution 3-2: a valid RO satisfies at least one of the following conditions: 3-2-1-1, 3-2-1-2, 3-2-1-3, and 3-2-1-4.

Condition 3-2-1-1: the RO does not precede a SS/PBCH block in a PRACH slot.

Condition 3-2-1-2: there is at least N symbols between the RO and a last symbol of a symbol where a previous SSB is located.

Condition 3-2-1-3: the RO has no overlap with a time domain of an SSB on a non-SBFD symbols.

Condition 3-2-1-4: the RO has no overlap with outside an UL subband on an SBFD symbol.

Tdd-UL-DL-ConfigurationCommon is configured, and there is a semi-SBFD configuration.

Solution 4-2-1: a valid RO satisfies at least one of conditions 4-2-1-1 and 4-2-1-2.

Condition 4-2-1-1: the RO is within an UL symbol.

Condition 4-2-1-2: the UL symbol in condition 4-2-1-1 refers to a symbol that remains UL after the configuration of the semi-SBFD.

Solution 4-2-2: a valid RO satisfies at least one of the following conditions 4-2-2-1 to4-2-2-6.

Condition 4-2-2-1: in a PRACH slot, the RO does not precede an SSB.

Condition 4-2-2-2: there is at least N symbols between the RO and a last symbol of a symbol where a previous SSB is located.

Condition 4-2-2-3: the RO symbol is separated from a previous DL symbol by at least N symbols.

Condition 4-2-2-4: the RO has no overlap with a time domain of an SSB on a non-SBFD symbols.

Condition 4-2-2-5: the RO has no overlap with an UL subband on an SBFD symbol.

Condition 4-2-2-6: the DL symbol is configured as DL in TDD-UL-DL-ConfigCommon and is not configured as an SBFD symbol.

In the above solutions, N is an integer greater than or equal to 0, which is determined according to a communication protocol.

In some embodiments, the SBFD aware UE determines a valid RO using any of the solutions in the present disclosure.

In some embodiments, when the second type of RO in the first RACH resource and the second type of RO in the third RACH resource use the above solutions, different conditions may be considered.

In some embodiments, conditions considered when the second type of RO and the third type of RO use the above solutions may be different.

In some embodiments, in the third RACH resource, any embodiment of the present disclosure is used for determining a valid RO for the first type of RO, the second type of RO and the third type of RO.

In some embodiments, in the third RACH resource, the first type of RO is an invalid RO; for the second type of RO and the third type of RO, any embodiment of the present disclosure is used for determining a valid RO.

In some embodiments, in the third RACH resource, the first type of RO is an invalid RO; in the second type of RO and/or the third type of RO, an RO is an invalid RO when a symbol where the RO is located includes at least one non-SBFD symbol; and for other ROs, any embodiment of the present disclosure is used for determining a valid RO.

In some embodiments, the non-SBFD aware UE uses Option 1-1 and Option 1-2 to determine whether the RO is valid:
Option 1-1: when tdd-UL-DL-ConfigurationCommon is not configured, the valid RO meets at least one of conditions 1-1 and 1-2.

Condition 1-1: in a first slot, the RO does not precede an SSB.

Condition 1-2: the RO is at least N symbols away from a symbol where a previous SSB is located.

Option 1-2: when tdd-UL-DL-ConfigurationCommon has a configuration, the valid RO meets condition 2-1 or meets at least one of conditions 2-2, 2-3 or 2-4.

Condition 2-1: the RO is within an UL symbol.

Condition 2-2: in a first slot, the RO does not precede an SSB.

Condition 2-3: there is at least N symbols between the RO and a symbol where a previous SSB is located.

Condition 2-4: there is at least N symbols between the RO and a previous DL symbol.

In some embodiments, in a first RACH resource and/or a second RACH resource, results of enabling the SBFD aware UE and the non-SBFD aware UE through network configuration to determine whether the first type of RO and/or the second type of RO is a valid RO are the same.

In some embodiments, the UE does not expect an RO to be a valid RO for a non-SBFD aware UE and does not expect the RO to be an invalid RO for an SBFD aware UE (to avoid making a mapping relationship between SSBs and valid ROs too complicated when there are both non-SBFD aware UEs and SBFD aware UEs). The non-SBFD aware UE refers to a UE that is unable to recognize an SBFD symbol, and the SBFD aware UE refers to a UE that is able recognize SBFD symbols.
a) If an F symbol is configured as SBFD through a semi-SBFD, a frequency domain range of part of ROs on this SBFD symbol overlaps with an UL frequency domain range.
   i) For example, in FIG. 2b and FIG. 2c, RO#8 is an invalid RO for the SBFD aware UE and is a valid RO for the non-SBFD aware UE.
b) If a valid RO cannot span SBFD and non-SBFD symbols, the F symbol is configured as SBFD through a semi-SBFD, some ROs span SBFD and non-SBFD symbols, and a non-SBFD symbol is an F symbol or an UL symbol.
   i) For example, in FIG. 2b and FIG. 2c, RO#9, 10, and 11 are invalid ROs for the SBFD aware UE and are valid ROs for the non-SBFD aware UE.

In some embodiments, a frequency domain configuration of an RACH in the first RACH resource, the second RACH resource and/or the third RACH resource is configured with only one starting RB position msg1-FrequencyStart on the SBFD symbol and the non-SBFD symbol, and the starting position msg1-FrequencyStart of the frequency domain may be understood differently in different RO categories.

Option 1: an offset value of the starting position of the RACH resource (a frequency domain starting position of an RO with a lowest frequency) relative to a starting position of an UL frequency domain range on the non-SBFD symbol is the msg1-FrequencyStart.

Option 2: an offset value of the starting position of the RACH resource (a frequency domain starting position of an RO with the lowest frequency) relative to the starting position of an UL frequency domain range on the SBFD symbol is the msg1-FrequencyStart.

In some embodiments, the first type of RO, the second type of RO, and the third type of RO use Option 1.

In some embodiments, the first type of RO, the second type of RO, and the third type of RO use Option 2.

In some embodiments, the first type of RO uses Option 1, and the second type of RO and the third type of RO use Option 2.

In some embodiments, the first type of RO and the second type of RO use Option 1, and the third type of RO uses Option 2.

In some embodiments, in the first RACH resource, the second RACH resource and/or the third RACH resource, the first type of RO and the second type of RO use Option 1, and the third type of RO uses Option 2.

In some embodiments, in the first RACH resource/the second RACH resource, the first type of RO and the second type of RO use Option 1, and the third type of RO uses Option 2; in the third RACH resource, the first type of RO uses Option 1, and the second type of RO and the third type of RO use Option 2.

In some embodiments, only the frequency domain configuration of the second type of RO and/or the third type of RO is configured in the third RACH resource.

For a base station side, the method is as described on the terminal side and are not repeated here.

Embodiments of the present disclosure also provide a device for implementing any one of the above methods. For example, a device is provided, including units or modules for implementing steps performed by a terminal in any one of the above methods. Furthermore, another device is provided, including units or modules for implementing steps performed by a network device (for example, an access network device, a core network function node, a core network device, etc.) in any one of the above methods.

It should be understood that the division of units or modules in the above devices is merely a division of logical functions. In actual implementations, they may be fully or partially integrated into a single physical entity or may be physically separated. In addition, the units or modules in the device may be implemented in the form of processor invoking software. For example, the device includes a processor, which is connected to a memory for storing instructions. The processor invokes the instructions stored in the memory to implement any one of the above methods or the functions of the units or modules in the device. The processor may be a general-purpose processor, such as a central processing unit (CPU) or a microprocessor, and the memory may be internal or external to the device. Or, the units or modules in the device may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above device may be fully implemented in the form of processor invoking software, or fully implemented in the form of the hardware circuit, or partially implemented in the form of processor invoking software and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 7a is a schematic diagram of a structure of a terminal according to an embodiment of the present disclosure. As shown in FIG. 7a, a terminal 7100 may include at least one of a transceiver module 7101 or a processing module 7102. In some embodiments, the transceiver module 7101 is configured to receive first information, in which the first information is used for determining a configuration of a random access channel occasion (RO) associated with a subband full duplex (SBFD) symbol; in which the configuration of the RO includes: a time domain position of the RO and/or a frequency domain position of the RO. The processing module 7102 is configured to determine whether the RO is a valid RO according to the configuration of the RO. Optionally, the transceiver module is configured to implement at least one of communication steps such as sending and/or receiving (for example, steps S2101, S2201, S2202, but not limited thereto) performed by the terminal 101 in any one of the above methods, which are not repeated here. Optionally, the processing module 7102 is configured to implement at least one of other steps (such as step S2102, step S2103, step S2203) performed by the terminal 101 in any one of the above methods, which are not repeated here.

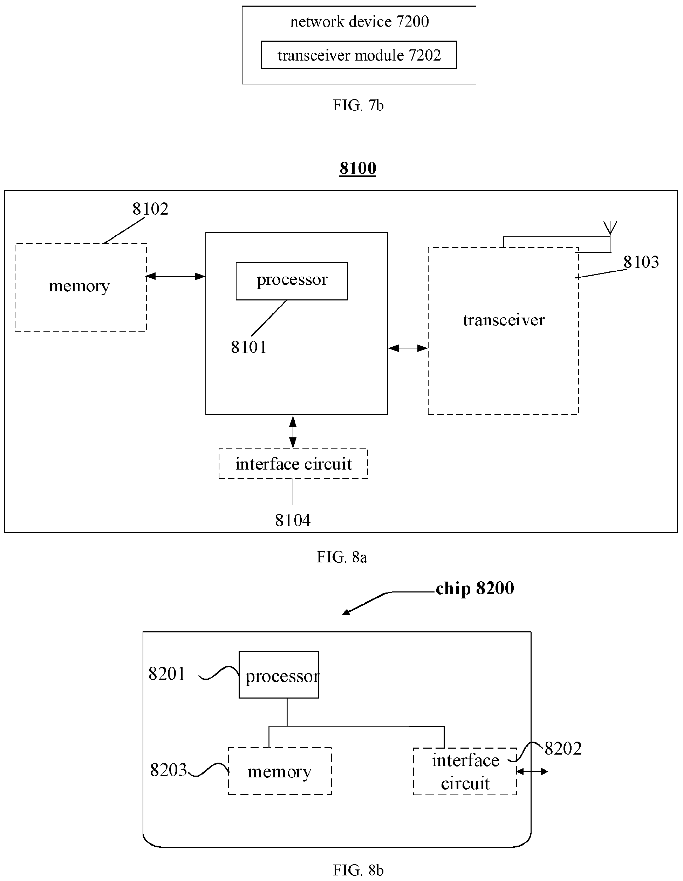

FIG. 7b is a schematic diagram of a structure of a network device according to an embodiment of the present disclosure. As shown in FIG. 7b, the network device 7200 may include a transceiver module 7201. In some embodiments, the transceiver module 7201 is configured to send first information, in which the first information is used for determining a configuration of a random access channel occasion (RO) associated with a subband full duplex (SBFD) symbol; in which the configuration of the RO includes: a time domain position of the RO and/or a frequency domain position of the RO; in which the configuration of the RO is used by a terminal to determine whether the RO is a valid RO. Optionally, the transceiver module is configured to implement at least one of communication steps such as sending and/or receiving (for example, step S2101, S2201, S2202, but not limited thereto) performed by the network device 10 in any one of the above methods, which are not repeated here.

FIG. 8a is a block diagram of a communication device 8100 according to an embodiment of the present disclosure. The communication device 8100 may be a network device (for example, an access network device, a core network device, etc.), or may be a terminal (for example, a user equipment, etc.), or may be a chip, a chip system, or a processor, etc., that supports the network device to implement any one of the above methods, or may be a chip, a chip system, or a processor, etc., that supports the terminal to implement any one of the above methods. The communication device 8100 may be used to implement the methods described in the above method embodiments. For details, reference may be made to the description in the above method embodiments.

As shown in FIG. 8a, the communication device 8100 may include one or more processors 8101. The processor 8101 may be a general-purpose processor or a dedicated processor. For example, it may be a baseband processor or a central processing unit. The baseband processor may be configured to process communication protocols and communication data, and the central processor is configured to control communication device (such as a base station, a baseband chip, a terminal, a terminal chip, a DU or a CU, etc.) to execute a program and process program data. Optionally, the one or more processors 8101 are configured to call instructions so that the communication device 8100 executes any of the above methods.

In some embodiments, the communication device 8100 further includes one or more transceivers 8102. When the communication device 8100 includes one or more transceivers 8102, the transceiver 8102 performs at least one of communication steps such as sending and/or receiving in the above methods (for example, steps S2101, S2201, S2202, but not limited to these), and the processor 8101 performs at least one of other steps (for example, steps S2102, S2103, or S2203, but not limited to these). In an optional embodiment, the transceiver may include a receiver and/or a transmitter, and the receiver and the transmitter may be separated or integrated together. Optionally, the terms such as transceiver, transceiver unit, transceiver machine, transceiver circuit, interface circuit, interface, etc. may be replaced with each other, the terms such as transmitter, transmitting unit, transmitter machine, transmitting circuit, etc. may be replaced with each other, and the terms such as receiver, receiving unit, receiver machine, receiving circuit, etc. may be replaced with each other.

In some embodiments, the communication device 8100 further includes one or more memories 8103 for storing data. Optionally, all or part of the memories 8103 may also be located outside the communication device 8100. In an optional embodiment, the communication device 8100 may include one or more interface circuits 8104. Optionally, the interface circuit 8104 is connected to the memory 8102. The interface circuit 8104 may be used to receive data from the memory 8102 or other devices, and may be used to send the data to the memory 8102 or other devices. For example, the interface circuit 8104 may read data stored in the memory 8102 and send the data to the processor 8101.

The communication device 8100 described in the above embodiments may be a network device or a terminal, but the scope of the communication device 8100 described in the disclosure is not limited thereto, and the structure of the communication device 8100 may not be limited by FIG. 8a. The communication device may be a stand-alone device or may be part of a larger device. For example, the communication device may be: (1) a stand-alone integrated circuit (IC), a chip, a chip system or a subsystem; (2) a collection of ICs including one or more ICs. Optionally, the collection of ICs may also include storage components for storing data and programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8b is a block diagram of a chip 8200 according to an embodiment of the present disclosure. For the case where the communication device 8100 may be a chip or a chip system, reference may be made to the block diagram of the chip 8200 shown in FIG. 8b, but the present disclosure is not limited to this.

The chip 8200 includes one or more processors 8201, and the chip 8200 is configured to execute any one of the above methods.

In some embodiments, the chip 8200 further includes one or more interface circuits 8202. Optionally, the terms interface circuit, interface, transceiver pin, etc. can be interchanged with each other. In some embodiments, the chip 8200 further includes one or more memories 8203 for storing data. Optionally, all or part of the memories 8203 can be outside the chip 8200. Optionally, the interface circuit 8202 is connected to a memory 8203. The interface circuit 8202 may be used to receive data from the memory 8203 or other devices, and the interface circuit 8202 may be used to send the data to the memory 8203 or other devices. For example, the interface circuit 8202 may read data stored in the memory 8203 and send the data to the processor 8201.

In some embodiments, the interface circuit 8202 performs at least one of communication steps such as sending and/or receiving in the above methods (for example, S2101 or S2201, step S2202, but not limited to these). The interface circuit 8202 performing the communication steps such as sending and/or receiving in the above method, for example, means that the interface circuit 8202 performs data interaction between the processor 8201, the chip 8200, the memory 8203 or the transceiver device. In some embodiments, the processor 8201 performs at least one of other steps (for example, S2102, S2103, or S2203, but not limited to these).

The present disclosure also provides a storage medium for storing instructions. When the instructions are executed on the communication device 8100, the communication device 8100 is caused to perform any one of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also provides a program product. When the program product is executed by the communication device 8100, the communication device 8100 is caused to perform any one of the above methods. Optionally, the program product is a computer program product.

The present disclosure also provides a computer program. When the computer program is executed on a computer, the computer is caused to perform any one of the above methods.

## Claims

1. An information transmission method, comprising:
receiving first information, wherein the first information is used for determining a configuration of a random access channel occasion (RO) associated with a subband full duplex (SBFD) symbol; wherein the configuration of the RO comprises: a time domain position of the RO and/or a frequency domain position of the RO; and
determining whether the RO is a valid RO according to the configuration of the RO.

2. The method according to claim 1, wherein the valid RO satisfies at least one of the following conditions:
the valid RO being within an uplink (UL) symbol, wherein the UL symbol is configured as a UL symbol and not configured as an SBFD symbol;
in a physical random access channel (PRACH) slot, a time domain position of the valid RO not preceding a time domain position of a synchronization signal/physical broadcast channel block (SSB);
the valid RO being separated from a last symbol of a symbol where an SSB preceding a time domain position of the valid RO is located by at least N symbols in a time domain, wherein N is an integer greater than or equal to 0;
the valid RO having no overlap with a time domain position of an SSB on a non-SBFD symbol;
the valid RO being separated from a downlink (DL) symbol preceding a time domain position of the valid RO by at least N symbols, wherein the DL symbol is configured as a DL symbol and not configured as an SBFD symbol;
the valid RO having no overlap with outside of an UL subband on the SBFD symbol;
the valid RO not comprising both an SBFD symbol and a non-SBFD symbol;
the valid RO being on an SBFD symbol; or
the valid RO being on a non-SBFD symbol.

3. The method according to claim 1, wherein the first information is configured to indicate at least one of:
a first random access channel (RACH) resource for random access (RA) of a first type of terminal and a second type of terminal; or
a second RACH resource for RA of a second type of terminal and a third RACH resource for RA of a first type of terminal.

4. The method according to claim 3, wherein the first type of terminal is a terminal that is capable to recognize an SBFD time-frequency configuration; and the second type of terminal is a terminal that is unable to recognize an SBFD time-frequency configuration.

5. The method according to any one of claims 3 to 4, wherein an RO in the first RACH resource, the second RACH resource and/or the third RACH resource comprises at least one of the following categories:
a first type of RO, wherein the first type of RO is an RO that comprises a non-SBFD symbol and does not comprise an SBFD symbol;
a second type of RO, wherein the second type of RO is an RO that comprises a first type of SBFD symbol and does not comprise a second type of SBFD symbol; or
a third type of RO, wherein the third type of RO is an RO comprising the second type of SBFD symbol;
wherein, the first type of SBFD symbol is a symbol configured as a flexible F symbol by a time division duplex (TDD) uplink (UL) and downlink (DL) transmission common configuration, or a symbol without TDD UL DL transmission common configuration and configured as an SBFD symbol; the second type of SBFD symbol is a symbol configured as a DL symbol by the TDD UL DL transmission common configuration and configured as an SBFD symbol.

6. The method according to claim 5, wherein conditions for determining valid ROs in the second type of RO and the third type of RO are different.

7. The method according to claim 5, wherein, in the third RACH resource, the first type of RO is an invalid RO.

8. The method according to claim 5, wherein, in the third RACH resource, the first type of RO is an invalid RO, and an RO in the second type of RO and/or the third type of RO is an invalid RO in a case that a symbol where the RO is located comprises at least one non-SBFD symbol.

9. The method according to claim 1, wherein determining whether the RO is a valid RO according to the configuration of the RO comprises:
determining whether the RO is a valid RO based at least on whether the valid RO is allowed to comprise an SBFD symbol and a non-SBFD symbol, and the configuration of the RO.

10. The method according to claim 9, wherein determining whether the RO is a valid RO based at least on whether the valid RO is allowed to comprise an SBFD symbol and a non-SBFD symbol and the configuration of the RO comprises:
determining that the RO is the valid RO in a case that the valid RO is not allowed to comprise both an SBFD symbol and a non-SBFD symbol, the RO comprises an SBFD symbol or a non-SBFD symbol, and the configuration of the RO satisfies a first condition.

11. The method according to claim 10, wherein the first information does not comprise a TDD uplink and downlink transmission common configuration, and the first information comprises a semi-static SBFD configuration, and the first condition comprises at least one of:
the RO being within a flexible F symbol or the RO being within an SBFD symbol;
in a physical random access channel (PRACH) slot, a time domain position of the RO not preceding a time domain position of a synchronization signal/physical broadcast block (SSB);
the RO being separated from a last symbol of a symbol where an SSB preceding a time domain position of the RO is located by at least N symbols in a time domain, wherein N is an integer greater than or equal to 0;
the RO having no overlap with a time domain position of an SSB on a non-SBFD symbol;
the RO having no overlap with outside of an UL subband on the SBFD symbol;
the RO being on an SBFD symbol; or
the RO being on a non-SBFD symbol.

12. The method according to claim 10 or 11, wherein the first information comprises a TDD uplink and downlink transmission common configuration and a semi-static SBFD configuration, and the first condition comprises at least one of:
the RO being within an UL symbol; wherein an UL symbol is a symbol that is configured as a UL symbol and is not configured as an SBFD symbol.

13. The method according to any one of claims 10 to 12, wherein the first information comprises a TDD uplink and downlink transmission common configuration and a semi-static SBFD configuration, and the first condition comprises at least one of:
the RO being within an SBFD symbol or the RO being within a non-SBFD symbol;
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO being separated from a DL symbol preceding a time domain position of the RO by at least N symbols, wherein the DL symbol is a symbol configured as a DL symbol and not configured as an SBFD symbol;
the RO having no overlap with a time domain position of an SSB on a non-SBFD symbol;
the RO having no overlap with outside of an UL subband on the SBFD symbol;
the RO being on an SBFD symbol; or
the RO being on a non-SBFD symbol.

14. The method according to any one of claims 2 to 13, wherein determining whether the RO is a valid RO based at least on whether the valid RO is allowed to comprise an SBFD symbol and a non-SBFD symbol and the configuration of the RO comprises:
determining that the RO is the valid RO in a case that the valid RO is allowed to comprise an SBFD symbol and a non-SBFD symbol, the RO comprises an SBFD symbol and/or a non-SBFD symbol, and the configuration of the RO satisfies a second condition.

15. The method according to claim 14, wherein the first information does not comprise a TDD uplink and downlink transmission common configuration, and the first information comprises a semi-static SBFD configuration, and the second condition comprises at least one of:
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO having no overlap with a time domain position of an SSB on a non-SBFD symbol; or
the RO having no overlap with outside of an UL subband on the SBFD symbol.

16. The method according to claim 14 or 15, wherein the first information comprises a TDD uplink and downlink transmission common configuration and a semi-static SBFD configuration, and the second condition comprises at least one of:
the RO being within an UL symbol; wherein an UL symbol being a symbol that is configured as a UL symbol and is not configured as an SBFD symbol.

17. The method according to any one of claims 14 to 16, wherein the first information comprises a TDD uplink and downlink transmission common configuration and a semi-static SBFD configuration, and the second condition comprises at least one of:
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO being separated from a DL symbol preceding a time domain position of the RO by at least N symbols, wherein the DL symbol is configured as a DL symbol and not configured as an SBFD symbol;
the RO having no overlap with a time domain position of an SSB on a non-SBFD symbol; or
the RO having no overlap with outside of an UL subband on the SBFD symbol.

18. The method according to any one of claims 2 to 17, further comprising at least one of:
determining whether to allow the valid RO to comprise an SBFD symbol and a non-SBFD symbol according to a communication protocol; or
receiving second information, wherein the second information indicates whether the valid RO is allowed to comprise a SBFD symbol and a non-SBFD symbol.

19. The method according to any one of claims 1 to 18, wherein determining whether the RO is a valid RO according to the configuration of the RO comprises:
determining that the RO is not the valid RO in a case that the RO comprises an SBFD symbol, and a frequency domain range of the RO has an overlapping portion with outside of a frequency domain range of UL transmission on the SBFD symbol.

20. The method according to any one of claims 1 to 19, wherein the time domain position configured by the configuration of the RO comprises an SBFD symbol, and a frequency domain range of the RO has no overlapping portion with outside of a frequency domain range of UL transmission on the SBFD symbol.

21. The method according to any one of claims 1 to 20, wherein the RO configured by the configuration of the RO comprises an SBFD symbol or a non-SBFD symbol.

22. An information transmission method, wherein the method comprises:
sending first information, wherein the first information is used for determining a configuration of a random access channel occasion (RO) associated with a subband full duplex (SBFD) symbol; wherein the configuration of the RO comprises: a time domain position of the RO and/or a frequency domain position of the RO; wherein the configuration of the RO is used by a terminal to determine whether the RO is a valid RO.

23. The method according to claim 22, wherein the valid RO satisfies at least one of the following conditions:
the valid RO being within an uplink (UL) symbol, wherein the UL symbol is configured as a UL symbol and not configured as an SBFD symbol;
in a physical random access channel (PRACH) slot, a time domain position of the valid RO not preceding a time domain position of a synchronization signal/physical broadcast channel block (SSB);
the valid RO being separated from a last symbol of a symbol where an SSB preceding a time domain position of the valid RO is located by at least N symbols in a time domain, wherein N is an integer greater than or equal to 0;
the valid RO having no overlap with a time domain position of an SSB on a non-SBFD symbol;
the valid RO being separated from a downlink (DL) symbol preceding a time domain position of the valid RO by at least N symbols, wherein the DL symbol is configured as a DL symbol and not configured as an SBFD symbol;
the valid RO having no overlap with outside of an UL subband on the SBFD symbol;
the valid RO not comprising both an SBFD symbol and a non-SBFD symbol;
the valid RO being on an SBFD symbol; or
the valid RO being on a non-SBFD symbol.

24. The method according to claim 22, wherein the first information is configured to indicate at least one of:
a first random access channel (RACH) resource for random access (RA) of a first type of terminal and a second type of terminal; or
a second RACH resource for RA of a second type of terminal and a third RACH resource for RA of a first type of terminal.

25. The method according to claim 24, wherein the first type of terminal is a terminal that is capable to recognize an SBFD time-frequency configuration; and the second type of terminal is a terminal that is unable to recognize an SBFD time-frequency configuration.

26. The method according to any one of claims 24 to 25, wherein an RO in the first RACH resource, the second RACH resource and/or the third RACH resource comprises at least one of the following categories:
a first type of RO, wherein the first type of RO is an RO that comprises a non-SBFD symbol and does not comprise an SBFD symbol;
a second type of RO, wherein the second type of RO is an RO that comprises a first type of SBFD symbol and does not comprise a second type of SBFD symbol; or
a third type of RO, wherein the third type of RO is an RO comprising the second type of SBFD symbol;
wherein, the first type of SBFD symbol is a symbol configured as a flexible F symbol by a time division duplex (TDD) uplink (UL) and downlink (DL) transmission common configuration, or a symbol without TDD UL DL transmission common configuration and configured as an SBFD symbol; the second type of SBFD symbol is a symbol configured as a DL symbol by the TDD UL DL transmission common configuration and configured as an SBFD symbol.

27. The method of claim 26, wherein conditions for determining valid ROs in the second type of RO and the third type of RO are different.

28. The method according to claim 26, wherein, in the third RACH resource, the first type of RO is an invalid RO.

29. The method according to claim 26, wherein, in the third RACH resource, the first type of RO is an invalid RO, and an RO in the second type of RO and/or the third type of RO is an invalid RO in a case that a symbol where the RO is located comprises at least one non-SBFD symbol.

30. The method according to claim 22, wherein
the configuration of the RO is used for determining whether the RO is the valid RO based at least on whether the valid RO is allowed to comprise an SBFD symbol and a non-SBFD symbol.

31. The method according to claim 30, wherein the RO is the valid RO in a case that the valid RO is not allowed to comprise both an SBFD symbol and a non-SBFD symbol, the RO comprises an SBFD symbol or a non-SBFD symbol, and the configuration of the RO satisfies a first condition.

32. The method according to claim 31, wherein the first information does not comprise a TDD uplink and downlink transmission common configuration, and the first information comprises a semi-static SBFD configuration, and the first condition comprises at least one of:
the RO being within a flexible F symbol or the RO being within an SBFD symbol;
in a physical random access channel (PRACH) slot, a time domain position of the RO not preceding a time domain position of a synchronization signal/physical broadcast block (SSB);
the RO being separated from a last symbol of a symbol where an SSB preceding a time domain position of the RO is located by at least N symbols in a time domain, wherein N is an integer greater than or equal to 0;
the RO having no overlap with a time domain position of an SSB on a non-SBFD symbol;
the RO having no overlap with outside of an UL subband on the SBFD symbol;
the RO being on an SBFD symbol; or
the RO being on a non-SBFD symbol.

33. The method according to claim 31 or 32, wherein the first information comprises a TDD uplink and downlink transmission common configuration and a semi-static SBFD configuration, and the first condition comprises at least one of:
the RO being within an UL symbol; wherein an UL symbol is a symbol that is configured as a UL symbol and is not configured as an SBFD symbol.

34. The method according to any one of claims 31 to 33, wherein the first information comprises a TDD uplink and downlink transmission common configuration and a semi-static SBFD configuration, and the first condition comprises at least one of:
the RO being within an SBFD symbol or the RO being within a non-SBFD symbol;
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO being separated from a DL symbol preceding a time domain position of the RO by at least N symbols, wherein the DL symbol is a symbol configured as a DL symbol and not configured as an SBFD symbol;
the RO having no overlap with a time domain position of an SSB on a non-SBFD symbol;
the RO having no overlap with outside of an UL subband on the SBFD symbol;
the RO being on an SBFD symbol; or
the RO being on a non-SBFD symbol.

35. The method according to any one of claims 30 to 34, wherein the RO is the valid RO in a case that the valid RO is allowed to comprise an SBFD symbol and a non-SBFD symbol, the RO comprises an SBFD symbol and/or a non-SBFD symbol, and the configuration of the RO satisfies a second condition.

36. The method according to claim 35, wherein the first information does not comprise a TDD uplink and downlink transmission common configuration, and the first information comprises a semi-static SBFD configuration, and the second condition comprises at least one of:
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO having no overlap with a time domain position of an SSB on a non-SBFD symbol; or
the RO having no overlap with outside of an UL subband on the SBFD symbol.

37. The method according to claim 35 or 36, wherein the first information comprises a TDD uplink and downlink transmission common configuration and a semi-static SBFD configuration, and the second condition comprises at least one of:
the RO being within an UL symbol; wherein an UL symbol being a symbol that is configured as a UL symbol and is not configured as an SBFD symbol.

38. The method according to any one of claims 35 to 37, wherein the first information comprises a TDD uplink and downlink transmission common configuration and a semi-static SBFD configuration, and the second condition comprises at least one of:
in a PRACH slot, a time domain position of the RO not preceding a time domain position of an SSB;
the RO being separated from a last symbol of a symbol where an SSB preceding a time domain position of the RO is located by at least N symbols in a time domain, wherein N is an integer greater than or equal to 0;
the RO being separated from a DL symbol preceding a time domain position of the RO by at least N symbols, wherein the DL symbol is configured as a DL symbol and not configured as an SBFD symbol;
the RO having no overlap with a time domain position of an SSB on a non-SBFD symbol; or
the RO having no overlap with outside of an UL subband on the SBFD symbol.

39. The method according to any one of claims 30 to 38, further comprising:
sending second information, wherein the second information indicates whether the valid RO is allowed to comprise a SBFD symbol and a non-SBFD symbol.

40. The method according to any one of claims 30 to 39, wherein the RO is not the valid RO in a case that the RO comprises an SBFD symbol, and a frequency domain range of the RO has an overlapping portion with outside of a frequency domain range of UL transmission on the SBFD symbol.

41. The method according to any one of claims 30 to 40, wherein the time domain position configured by the configuration of the RO comprises an SBFD symbol, and a frequency domain range of the RO has no overlapping portion with outside of a frequency domain range of UL transmission on the SBFD symbol.

42. The method according to any one of claims 30 to 41, wherein the RO configured by the configuration of the RO comprises an SBFD symbol or a non-SBFD symbol.

43. An information transmission method, comprising:
sending, by a network device, first information to a terminal, wherein the first information is used for determining a configuration of a random access channel occasion (RO) associated with a subband full duplex (SBFD) symbol; wherein the configuration of the RO comprises: a time domain position of the RO and/or a frequency domain position of the RO; and
determining, by the terminal, whether the RO is a valid RO according to the configuration of the RO.

44. An information transmission device, comprising:
a transceiver module, configured to receive first information, wherein the first information is used for determining a configuration of a random access channel occasion (RO) associated with a subband full duplex (SBFD) symbol; wherein the configuration of the RO comprises: a time domain position of the RO and/or a frequency domain position of the RO; and
a processing module, configured to determine whether the RO is a valid RO according to the configuration of the RO.

45. An information transmission device, comprising:
a transceiver module, configured to send first information, wherein the first information is used for determining a configuration of a random access channel occasion (RO) associated with a subband full duplex (SBFD) symbol; wherein the configuration of the RO comprises: a time domain position of the RO and/or a frequency domain position of the RO; wherein the configuration of the RO is used by a terminal to determine whether the RO is a valid RO.

46. A communication system, wherein the information transmission system comprises a network device and a terminal; wherein
the terminal is configured to perform the communication method according to any one of claims 1 to 21;
the network device is configured to perform the communication method according to any one of claims 22 to 42.

47. A communication device, comprising:
one or more processors;
wherein the processor is configured to call instructions to cause the communication device to perform the communication method according to any one of claims 1 to 21 or the communication method according to any one of claims 22 to 42.

48. A storage medium for storing instructions that, when executed on a communication device, causes communication device to perform the method according to any one of claims 1 to 21 or the communication method according to any one of claims 22 to 42.
